(19) **Europäisches Patentamt European Patent Office Office européen des brevets**

(11) **EP 3 926 623 B1**

(12) **EUROPEAN PATENT SPECIFICATION**

(45) Date of publication and mention of the grant of the patent:
**15.05.2024 Bulletin 2024/20**

(21) Application number: **20860648.3**

(22) Date of filing: **24.08.2020**

(51) International Patent Classification (IPC):
$G10L\ 15/16^{(2006.01)}$    $G10L\ 15/06^{(2013.01)}$
$G06N\ 3/044^{(2023.01)}$    $G06N\ 3/084^{(2023.01)}$
$G06N\ 3/045^{(2023.01)}$    $G10L\ 25/18^{(2013.01)}$
$G06N\ 3/048^{(2023.01)}$    $G10L\ 15/02^{(2006.01)}$

(52) Cooperative Patent Classification (CPC):
**G10L 15/16; G06N 3/044; G06N 3/045; G06N 3/084; G10L 15/063;** G06N 3/048; G10L 25/18; G10L 2015/025

(86) International application number:
**PCT/CN2020/110742**

(87) International publication number:
**WO 2021/043015 (11.03.2021 Gazette 2021/10)**

(54) **SPEECH RECOGNITION METHOD AND APPARATUS, AND NEURAL NETWORK TRAINING METHOD AND APPARATUS**

VERFAHREN UND VORRICHTUNG ZUR SPRACHERKENNUNG UND VERFAHREN UND VORRICHTUNG ZUM TRAINING EINES NEURONALEN NETZES

PROCÉDÉ ET APPAREIL DE RECONNAISSANCE VOCALE, AINSI QUE PROCÉDÉ ET APPAREIL D'APPRENTISSAGE DE RÉSEAU NEURONAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.09.2019 CN 201910838469**

(43) Date of publication of application:
**22.12.2021 Bulletin 2021/51**

(73) Proprietor: **Tencent Technology (Shenzhen) Company Limited**
**Shenzhen, Guangdong, 518057 (CN)**

(72) Inventors:
- **WANG, Jun**
  **Shenzhen, GUANGDONG 518057 (CN)**
- **LAM, Wing Yip**
  **Shenzhen, GUANGDONG 518057 (CN)**
- **SU, Dan**
  **Shenzhen, GUANGDONG 518057 (CN)**
- **YU, Dong**
  **Shenzhen, GUANGDONG 518057 (CN)**

(74) Representative: **Eisenführ Speiser**
**Patentanwälte Rechtsanwälte PartGmbB**
**Postfach 10 60 78**
**28060 Bremen (DE)**

(56) References cited:
**CN-A- 103 810 999**    **CN-A- 108 172 238**
**CN-A- 110 097 894**    **CN-A- 110 189 749**
**CN-A- 110 600 018**    **JP-A- H11 224 098**

- **Lam Max W.Y. ET AL: "Extract, Adapt and Recognize: An End-to-End Neural Network for Corrupted Monaural Speech Recognition", Research Gate, 15 July 2019 (2019-07-15), pages 1-6, XP055958871, Research Gate Retrieved from the Internet: URL:https://www.researchgate.net/publicati on/334458065_Extract_Adapt_and_Recognize_A n_End-to-End_Neural_Network_for_Corrupted_ Monaural_Speech_Recognition [retrieved on 2022-09-08]**

**(Cont. next page)**

EP 3 926 623 B1

- **Seo Jungwon: "Minimum Word Error Rate Training for Speech Separation", MASTER'S THESIS, University of Stavanger, 1 January 2019 (2019-01-01), XP055887899, Retrieved from the Internet: URL:https://uis.brage.unit.no/uis-xmlui/bitstream/handle/11250/2620490/Seo_Jungwon.pdf?sequence=4 [retrieved on 2022-02-07]**
- **ZHOU GUO-BING ET AL: "Minimal gated unit for recurrent neural networks", INTERNATIONAL JOURNAL OF AUTOMATION AND COMPUTING, ZHONGGUO KEXUE ZAZHISHE, CN, vol. 13, no. 3, 11 June 2016 (2016-06-11), pages 226-234, XP035975955, ISSN: 1476-8186, DOI: 10.1007/S11633-016-1006-2 [retrieved on 2016-06-11]**
- **SAINATH TARA N ET AL: "Convolutional, Long Short-Term Memory, fully connected Deep Neural Networks", 2015 IEEE INTERNATIONAL CONFERENCE ON ACOUSTICS, SPEECH AND SIGNAL PROCESSING (ICASSP), IEEE, 19 April 2015 (2015-04-19), pages 4580-4584, XP033187628, DOI: 10.1109/ICASSP.2015.7178838 [retrieved on 2015-08-04]**

**Description**

This application claims priority to Chinese Patent Application No. 201910838469.5, entitled "SPEECH RECOGNITION METHOD AND APPARATUS, AND NEURAL NETWORK TRAINING METHOD AND APPARATUS" filed with the China National Intellectual Property Administration on September 5, 2019.

FIELD

This disclosure relates to the field of artificial intelligence technologies, and specifically, to a method for training a neural network for implementing speech recognition, an apparatus for training a neural network for implementing speech recognition, a speech recognition method, a speech recognition apparatus, an electronic device, and a computer-readable storage medium.

BACKGROUND

With the development of science and technology and the substantial improvement in hardware calculation capabilities, at present, speech recognition is implemented based on the deep learning technology an increasing quantity of times.

However, the implementation of speech recognition in acoustic scenarios is usually limited by the variability of the acoustic scenarios. For example, a case in which a monophonic voice signal is interfered with by non-stationary noise, such as background music or multi-speaker interference, is common in actual application scenarios.

Although the introduction of the deep learning technology brings large performance improvements to speech recognition technologies, performance of conventional speech recognition technologies in complex environments still needs to be optimized.

The information disclosed in the above background part is only used for enhancing the understanding of the background of this disclosure. Therefore, information that does not constitute the related art known to a person of ordinary skill in the art may be included in the above background part.

"Extract, Adapt and Recognize: an End-to-end Neural Network for Corrupted Monaural Speech Recognition" discloses that Automatic speech recognition (ASR) in challenging conditions, such as in the presence of interfering speakers or music, remains an unsolved problem. The paper presents Extract, Adapt and Recognize (EAR), an end-to-end neural network which allows fully learnable separation and recognition components towards optimizing the ASR criterion. In between a state-of-the art speech separation module as an extractor and an acoustic modeling module as a recognizer, EAR introduces an adaptor, where adapted acoustic features are learned from the separation outputs using a bi-directional long short-term memory network trained to directly minimize the recognition loss. Relative to a conventional joint training model, EAR model can achieve 8:5% to 22:3%, and 1:2% to 26:9% word error rate reductions (WERR), under various dBs of music corruption and speaker interference respectively. With speaker tracing the WERR can be further promoted to 12:4% to 29:0%.

"Minimum Word Error Rate Training for Speech Separation" discloses that the cocktail party problem, also known as a single-channel multi-talker problem, is a significant challenge to enhance the performance of automatic speech recognition (ASR) systems. Most existing speech separation model only concerns the signal-level performance, i.e, source-to-distortion ratio(SDR), via their cost/loss function, not a transcription-level performance. However, transcription-level measurement, such as word error rate(WER) is the ultimate measurement that can be used in the performance of ASR. Therefore the paper proposes a new loss function that can directly consider both signal and transcription level performance with integrating both speech separation and speech recognition system. Moreover, the paper suggests the generalized integration architecture that can be applied to any combination of speech recognition/separation system regardless of their system environment. In this thesis, first, the paper reviews the techniques from the primary signal processing knowledge to deep learning techniques and introduce the detailed target and challenge in speech separation problem. Moreover, the paper analyzes the several famous speech separation models derived from a deep learning approach. Then the paper introduces the new loss function with detailed system architecture, including the step-by-step process from pre-processing to evaluation. The paper improves the performance of the existing model using training approach. The solution enhances average SDR from 0.10dB to 4.09dB and average WER from 92.7% to 55.7% using LibriSpeech dataset.

"Minimal Gated Unit for Recurrent Neural Networks" discloses that Recurrent neural networks (RNN) have been very successful in handling sequence data. However, understanding RNN and finding the best practices for RNN learning is a difficult task, partly because there are many competing and complex hidden units, such as the long short-term memory (LSTM) and the gated recurrent unit(GRU). The paper proposes a gated unit for RNN, named as minimal gated unit(MGU), since it only contains one gate, which is a minimal design among all gated hidden units. The design of MGU benefits from evaluation results on ISTM and GRU in the literature. Experiments on various sequence data show that MGU has comparable accuracy with GRU, but has a simpler structure, fewer parameters, and faster training. Hence, MGU is suitable in RNN's applications. Its simple architecture also means that it is easier to evaluate and tune, and in principle it is easier to study MGU's properties theoretically and empirically.

"CONVOLUTIONAL, LONG SHORT-TERM MEMORY, FULLY CONNECTED DEEP NEURAL NETWORKS" discloses that both Convolutional Neural Networks (CNNs) and Long Short-Term Memory(LSTM) have shown improvements over Deep Neural Networks(DNNs) across a wide variety of speech recognition tasks. CNNs, LSTMs and DNNs are complementary in their modeling capabilities, as CNNs are good at reducing frequency variations, LSTMs are good at temporal modeling, and DNNs are appropriate for mapping features to a more separable space. The paper takes advantage of the complementarity of CNNs, LSTMs and DNNs by combining them into one unified architecture. The paper explores the proposed architecture, which called CLDNN, on a variety of large vocabulary tasks, varying from 200 to 2,000 hours. The paper finds that the CLDNN provides a 4-6% relative improvement in WER over an LSTM, the strongest of the three individual models.

SUMMARY

An objective of embodiments of this disclosure is to provide a method for training a neural network for implementing speech recognition, an apparatus for training a neural network for implementing speech recognition, a speech recognition method, a speech recognition apparatus, an electronic device, and a computer-readable storage medium, thereby improving speech recognition performance under complex interference sound conditions.

According to an aspect of this disclosure, a method of training a neural network for implementing speech recognition is provided. The method is performed by an electronic device. The neural network includes a first subnetwork, a second subnetwork, and a third subnetwork. The method includes: obtaining a piece of sample data, the piece of sample data including a mixed speech spectrum and a labeled phoneme of the mixed speech spectrum; extracting a target speech spectrum from the mixed speech spectrum by using the first subnetwork, where the mixed speech spectrum is a spectrum feature of mixed speech data, the mixed speech data comprises target speech data and interference speech data, the target speech spectrum is a spectrum feature of the target speech data; adaptively transforming the target speech spectrum by using the second subnetwork, to obtain an intermediate transition representation; performing phoneme recognition on the intermediate transition representation by using the third subnetwork; and updating parameters of the first subnetwork, the second subnetwork, and the third subnetwork according to a result of the phoneme recognition and the labeled phoneme. The adaptively transforming the target speech spectrum by using the second subnetwork comprises: adaptively transforming the target speech spectrum corresponding to time-frequency windows in sequence according to a sequence of the time-frequency windows corresponding to the target speech spectrum, wherein a transformation process of the adaptively transforming for one of the time-frequency windows comprises: generating a first piece of hidden state information for a current transformation process according to the target speech spectrum corresponding to the time-frequency window targeted by the current transformation process and a first piece of hidden state information for a previous transformation process; and obtaining, based on the first pieces of hidden state information, the intermediate transition representation corresponding to the time-frequency window targeted by the current transformation process. The generating a first piece of hidden state information for a current transformation process comprises: calculating candidate state information, an input weight of the candidate state information, a forget weight of target state information for the previous transformation process, and an output weight of target state information for the current transformation process according to the target speech spectrum corresponding to a current time-frequency window and the first piece of hidden state information for the previous transformation process; retaining the target state information for the previous transformation process according to the forget weight, to obtain first intermediate state information; retaining the candidate state information according to the input weight of the candidate state information, to obtain second intermediate state information; obtaining the target state information for the current transformation process according to the first intermediate state information and the second intermediate state information; and retaining the target state information for the current transformation process according to the output weight of the target state information for the current transformation process, to obtain the first piece of hidden state information for the current transformation process. The method further comprises: adaptively transforming the target speech spectrum corresponding to the time-frequency windows in reverse sequence to obtain a second piece of hidden state information; splicing the first piece of hidden state information with the second piece of hidden state information to obtain a target piece of hidden state information; and using the target piece of hidden state information as the first piece of hidden state information.

According to an aspect of this disclosure, a speech recognition method based on a neural network is provided. The method is performed by an electronic device. The neural network includes a first subnetwork, a second subnetwork, and a third subnetwork. The method includes: obtaining a mixed speech spectrum to be recognized; extracting a target speech spectrum from the mixed speech spectrum by using the first subnetwork, where the mixed speech spectrum is a spectrum feature of mixed speech data, the mixed speech data comprises target speech data and interference speech data, the target speech spectrum is a spectrum feature of the target speech data; adaptively transforming the target speech spectrum by using the second subnetwork, to obtain an intermediate transition representation; and performing phoneme recognition on the intermediate transition representation by using the third subnetwork. The adaptively transforming the target speech spectrum by using the second subnetwork comprises: adaptively transforming the target speech spectrum corresponding to time-frequency windows in sequence according to a sequence of the time-frequency windows corresponding to the target speech spectrum, wherein a transformation process of the adaptively transforming for one of the time-frequency windows comprises: generating a first piece of hidden state information for a current transformation process according to the target speech spectrum corresponding to the time-frequency window targeted by the current transformation process and a first piece of hidden state information for a previous transformation process; and obtaining, based on the first pieces of hidden state information, the intermediate transition representation corresponding to the time-frequency window targeted by the current transformation process. The generating a first piece of hidden state information for a current transformation process comprises: calculating candidate state information, an input weight of the candidate state information, a forget weight of target state information for the previous transformation process, and an output weight of target state information for the current transformation process according to the target speech spectrum corresponding to a current time-frequency window and the first piece of hidden state information for the previous transformation process; retaining the target state information for the previous transformation process according to the forget weight, to obtain first intermediate state information; retaining the candidate state information according to the input weight of the candidate state information, to obtain second intermediate state information; obtaining the target state information for the current transformation process according to the first intermediate state information and the second intermediate state information; and retaining the target state information for the current transformation process according to the output weight of the target state information for the current transformation process, to obtain the first piece of hidden state information for the current transformation process. The method further comprises: adaptively transforming the target speech spectrum corresponding to the time-frequency windows in reverse sequence to obtain a second piece of hidden state information; splicing the first piece of hidden state information with the second piece of hidden state information to obtain a target piece of hidden state information; and using the target piece of hidden state information as the first piece of hidden state information.

According to an aspect of this disclosure, an apparatus of training a neural network for implementing speech recognition is provided. The neural network includes a first subnetwork, a second subnetwork, and a third subnetwork. The apparatus includes: a data obtaining module, configured to obtain a piece of sample data, the piece of sample data including a mixed speech spectrum and a labeled phoneme of the mixed speech spectrum; a target speech extraction module, configured to extract a target speech spectrum from the mixed speech spectrum by using the first subnetwork; an adaptive transformation module, configured to adaptively transform the target speech spectrum by using the second subnetwork, to obtain an intermediate transition representation; a speech recognition module, configured to perform phoneme recognition on the intermediate transition representation by using the third subnetwork; and a parameter update module, configured to update parameters of the first subnetwork, the second subnetwork, and the third subnetwork according to a result of the phoneme recognition and the labeled phoneme.

According to an aspect of this disclosure, a speech recognition apparatus based on a neural network is provided. The neural network includes a first subnetwork, a second subnetwork, and a third subnetwork. The apparatus includes: a data obtaining module, configured to obtain a mixed speech spectrum to be recognized; a target speech extraction module, configured to extract a target speech spectrum from the mixed speech spectrum by using the first subnetwork; an adaptive transformation module, configured to adaptively transform the target speech spectrum by using the second subnetwork, to obtain an intermediate transition representation; and a speech recognition module, configured to perform phoneme recognition on the intermediate transition representation by using the third subnetwork.

According to an aspect of this disclosure, an electronic device is provided. The electronic device includes a processor and a memory. The memory is configured to store executable instructions of the processor. The processor is configured to execute the executable instructions to perform the method for training a neural network or the speech recognition method described above.

According to an aspect of this disclosure, a computer-readable storage medium is provided. The computer-readable storage medium stores a computer program. The computer program, when executed by a processor, implements the method for training a neural network or the speech recognition method described above.

It is to be understood that, the foregoing general descriptions and the following detailed descriptions are merely for illustration and explanation purposes and are not intended to limit this disclosure.

BRIEF DESCRIPTION OF THE DRAWINGS

Accompanying drawings herein are incorporated into a specification and constitute a part of this specification, show embodiments that conform to this disclosure, and are used for describing a principle of this disclosure together with this specification. Apparently, the accompanying drawings in the following descriptions are merely some embodiments of this disclosure, and a person of ordinary skill in the art may further obtain other accompanying drawings according to the accompanying drawings without creative efforts.

FIG. 1 is a schematic diagram of an exemplary system architecture to which a method and apparatus for training a neural network according to embodiments of this disclosure are applicable.

FIG. 2 is a schematic structural diagram of a computer system adapted to implement an electronic device according to an embodiment of this disclosure.

FIG. 3 is a schematic flowchart of a method for training a neural network according to an embodiment of this disclosure.

FIG. 4 is a schematic flowchart of a process of extracting a target speech spectrum according to an embodiment of this disclosure.

FIG. 5 is a schematic signal flow diagram of a LSTM unit according to an embodiment of this disclosure.

FIG. 6 is a schematic flowchart of generating a piece of hidden state information for a current transformation process according to an embodiment of this disclosure.

FIG. 7 is a schematic flowchart of a process of performing phoneme recognition according to an embodiment of this disclosure.

FIG. 8 is a schematic flowchart of a speech recognition method according to an embodiment of this disclosure.

FIG. 9 is a schematic architecture diagram of an automatic speech recognition system according to an embodiment of this disclosure.

FIG. 10A is a schematic reference diagram of a recognition effect of an automatic speech recognition system according to an embodiment of this disclosure.

FIG. 10B is a schematic reference diagram of a recognition effect of an automatic speech recognition system according to an embodiment of this disclosure.

FIG. 11 is a schematic block diagram of an apparatus for training a neural network according to an embodiment of this disclosure.

FIG. 12 is a schematic block diagram of a speech recognition apparatus according to an embodiment of this disclosure.

DESCRIPTION OF EMBODIMENTS

Exemplary embodiments are now described more comprehensively with reference to the accompanying drawings. However, the exemplary embodiments can be implemented in various forms and are not construed as being limited to the examples herein. Conversely, such embodiments are provided to make this disclosure more comprehensive and complete, and fully convey the concepts of the exemplary embodiments to a person skilled in the art. The described features, structures, or characteristics may be combined in one or more embodiments in any appropriate manner. In the following description, many specific details are provided to give a full understanding of the embodiments of this disclosure. However, it is to be appreciated by a person skilled in the art that one or more of the specific details may be omitted during practice of the technical solutions of this disclosure, or other methods, components, apparatus, steps, or the like may be used. In other cases, well-known technical solutions are not shown or described in detail to avoid overwhelming the subject and thus obscuring various aspects of this disclosure.

In addition, the accompanying drawings are only schematic illustrations of this disclosure and are not necessarily drawn to scale. The same reference numbers in the accompanying drawings represent the same or similar parts, and therefore, repeated descriptions thereof are omitted. Some of the block diagrams shown in the accompanying drawings are functional entities and do not necessarily correspond to physically or logically independent entities. The functional entities may be implemented in the form of software, or implemented in one or more hardware modules or integrated circuits, or implemented in different networks and/or processor apparatuses and/or microcontroller apparatuses.

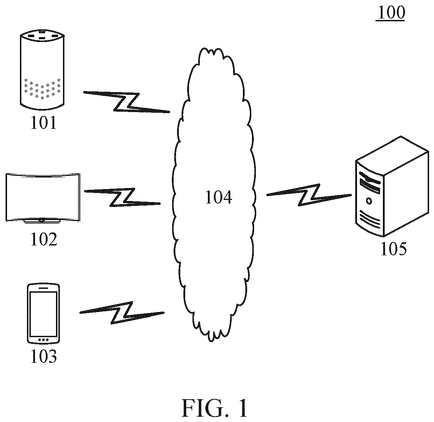

FIG. 1 is a schematic diagram of a system architecture of an exemplary application environment to which a method and apparatus for training a neural network for implementing speech recognition, and a speech recognition method and apparatus according to embodiments of this disclosure are applicable.

As shown in FIG. 1, a system architecture 100 may include one or more of terminal devices 101, 102, and 103, a network 104, and a server 105. The network 104 is a medium configured to provide communication links between the terminal devices 101, 102, and 103, and the server 105. The network 104 may include various connection types, for example, a wired or wireless communication link, or an optical fiber cable. The terminal devices 101, 102, and 103 may include, but are not limited to, a smart speaker, a smart television, a smart television box, a desktop computer, a portable computer, a smartphone, a tablet computer, and the like. It is to be understood that the quantities of terminal devices, networks, and servers in FIG. 1 are merely exemplary. There may be any quantities of terminal devices, networks, and servers according to an implementation requirement. For example, the server 105 may be a server cluster including multiple servers.

The method for training a neural network or the speech recognition method provided in the embodiments of this disclosure may be performed by the server 105, and correspondingly, a method for training a neural network or a speech recognition apparatus may be disposed in the server 105. The method for training a neural network or the speech recognition method provided in the embodiments of this disclosure may alternatively be performed by the terminal devices 101, 102, and 103, and correspondingly, a method for training a neural network or a speech recognition apparatus may alternatively be disposed in the terminal devices 101, 102, and 103. The method for training a neural network or the speech recognition method provided in the embodiments of this disclosure may further be performed by the terminal devices 101, 102, and 103 and the server 105 together, and correspondingly, the method for training a neural network or the speech recognition apparatus may be disposed in the terminal devices 101, 102, and 103 and the server 105, which is not particularly limited in this exemplary embodiment.

For example, in an exemplary embodiment, after obtaining mixed speech data to be recognized, the terminal devices 101, 102, and 103 may encode the mixed speech data and transmit the mixed speech data to the server 105. The server 105 decodes the received mixed speech data and extracts a spectrum feature of the mixed speech data, to obtain a mixed speech spectrum, and then extracts a target speech spectrum from the mixed speech spectrum by using a first subnetwork, adaptively transforms the target speech spectrum by using a second subnetwork to obtain an intermediate transition representation, and performs phoneme recognition based on the intermediate transition representation by using a third subnetwork. After the recognition is completed, the server 105 may return a recognition result to the terminal devices 101, 102, and 103.

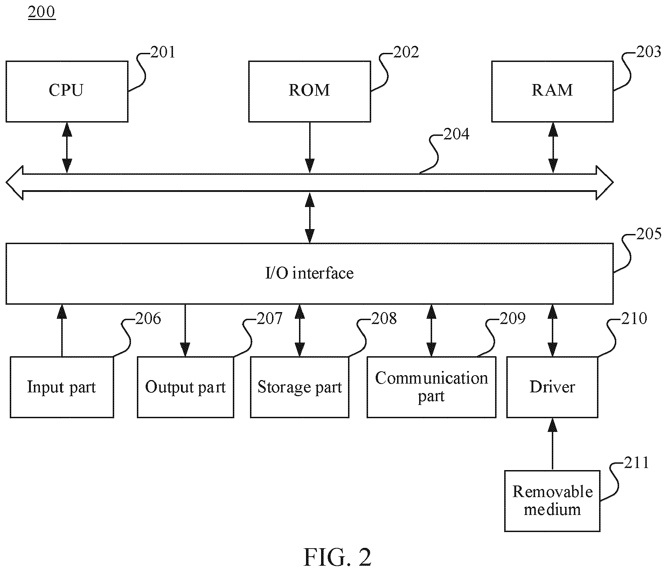

FIG. 2 is a schematic structural diagram of a computer system adapted to implement an electronic device according to an embodiment of this disclosure. A computer system 200 of the electronic device shown in FIG. 2 is merely an example, and does not constitute any limitation on functions and use ranges of the embodiments of this disclosure.

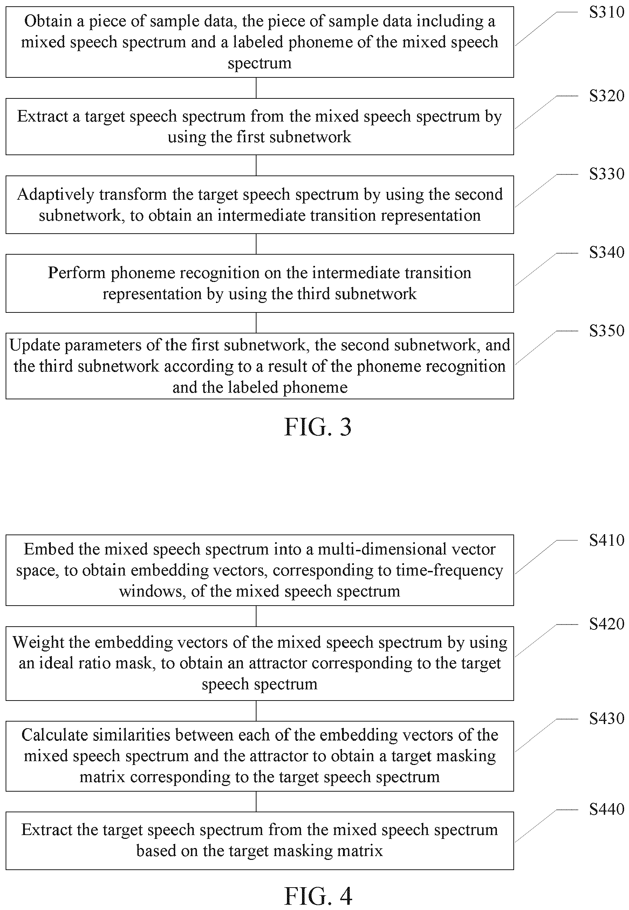

As shown in FIG. 2, the computer system 200 includes a central processing unit (CPU) 201, which can perform various appropriate actions and processing such as the methods described in FIG. 3, FIG. 4, FIG. 6, FIG. 7, and FIG. 8 according to a program stored in a read-only memory (ROM) 202 or a program loaded into a random access memory (RAM) 203 from a storage part 208. The RAM 203 further stores various programs and data required for operating the system. The CPU 201, the ROM 202, and the RAM 203 are connected to each other through a bus 204. An input/output (I/O) interface 205 is also connected to the bus 204.

The following components are connected to the I/O interface 205: an input part 206 including a keyboard, a mouse, or the like; an output part 207 including a cathode ray tube (CRT), a liquid crystal display (LCD), a speaker, or the like; a storage part 208 including a hard disk or the like; and a communication part 209 of a network interface card, including a LAN card, a modem, or the like. The communication part 209 performs communication processing via a network such as the Internet. A driver 210 is also connected to the I/O interface 205 as needed. A removable medium 211, such as a magnetic disk, an optical disk, a magneto-optical disk, a semiconductor memory, or the like, is installed on the drive 210 as needed, so that a computer program read therefrom is installed into the storage part 208 as needed.

Particularly, according to the embodiments of this disclosure, the processes described in the following by referring to the flowcharts may be implemented as computer software programs. For example, the embodiments of this disclosure include a computer program product, the computer program product includes a computer program carried on a computer-readable medium, and the computer program includes program code used for performing the methods shown in the flowcharts. In such an embodiment, the computer program may be downloaded and installed from the network through the communication part 209, and/or installed from the removable medium 211. When the computer program is executed by the central processing unit (CPU) 201, various functions defined in the method and apparatus of this disclosure are executed. In some embodiments, the computer system 200 may further include an Artificial Intelligence (AI) processor. The AI processor is configured to process computing operations related to machine learning.

Artificial Intelligence (AI) is a theory, method, technology, and application system that uses a digital computer or a machine controlled by a digital computer to simulate, extend, and expand human intelligence, perceive the environment, acquire knowledge, and use knowledge to obtain an optimal result. In other words, Artificial Intelligence is a comprehensive technology of computer sciences, attempts to understand essence of intelligence, and produces a new intelligent machine that can react in a manner similar to human intelligence. Artificial Intelligence is to study design principles and implementation methods of various intelligent machines, to enable the machines to have functions of perception, reasoning, and decision-making.

The Artificial Intelligence technology is a comprehensive discipline and relates to a wide range of fields including both hardware technologies and software technologies. Basic Artificial Intelligence technologies generally include technologies such as a sensor, a dedicated Artificial Intelligence chip, cloud computing, distributed storage, a big data processing technology, an operating/interaction system, and electromechanical integration. Artificial Intelligence software technologies mainly include several major directions such as a computer vision technology, a speech processing technology, a natural language processing technology, and machine learning/deep learning.

Key technologies of the speech processing technology include an automatic speech recognition (ASR) technology, a text-to-speech (TTS) technology, and a voiceprint recognition technology. To make a computer capable of listening, seeing, speaking, and feeling is the future development direction of human-computer interaction, and speech has become one of the most promising human-computer interaction methods in the future.

The technical solutions in this disclosure relate to the speech processing technology. The technical solutions of the embodiments of this disclosure are described in detail in the following.

Recognition of a mixed speech usually includes a speech separation stage and a phoneme recognition stage. In the related art, a cascaded framework including a speech separation model and a phoneme recognition model is provided, thereby allowing modular studies to be performed on the two stages independently. In such a modularization method, the speech separation model and the phoneme recognition model are trained independently in a training stage. However, the speech separation model inevitably introduces signal errors and signal distortions in a processing process, and the signal errors and signal distortions are not considered in a process of training the phoneme recognition model. As a result, speech recognition performance of the cascaded framework is sharply degraded.

Based on the foregoing problem, one of the solutions provided by the inventor is to jointly train the speech separation model and the phoneme recognition model, which can significantly reduce a recognition error rate in noise robust speech recognition and multi-speaker speech recognition tasks. The following examples are provided.

In a technical solution provided by the inventor, an independent framework is provided, so that the speech separation stage is directly operated in a Mel filter domain, so as to be consistent with the phoneme recognition stage in a feature domain. However, because generally, the speech separation stage is not implemented in the Mel filter domain, this technical solution may result in a failure in obtaining a better speech separation result. In addition, with the continuous progress and development of speech separation algorithms, it is difficult for an independent framework to quickly and flexibly integrate a third-party algorithm. In another technical solution provided by the inventor, a joint framework is provided, where a deep neural network is used to learn a Mel filter to affine a transformation function frame by frame. However, in the method, it is difficult to effectively model complex dynamic problems, and further, it is difficult to handle a speech recognition task under complex interference sound conditions.

Based on the one or more problems, this exemplary embodiment provides a method for training a neural network for implementing speech recognition. The method for training a neural network may be applied to the server 105, or may be applied to one or more of the terminal devices 101, 102, and 103. As shown in FIG. 3, the method for training a neural network for implementing speech recognition may include the following steps S310 to S350.

Step S310: Obtain a piece of sample data, the piece of sample data including a mixed speech spectrum and a labeled phoneme of the mixed speech spectrum.

Step S320: Extract a target speech spectrum from the mixed speech spectrum by using the first subnetwork.

Step S330: Adaptively transform the target speech spectrum by using the second subnetwork, to obtain an intermediate transition representation.

Step S340: Perform phoneme recognition on the intermediate transition representation by using the third subnetwork.

Step S350: Update parameters of the first subnetwork, the second subnetwork, and the third subnetwork according to a result of the phoneme recognition and the labeled phoneme.

In the method provided in this exemplary embodiment, the target speech spectrum extracted by using the first subnetwork is adaptively transformed by using the second subnetwork, to obtain the intermediate transition representation that may be inputted to the third subnetwork for phoneme recognition, so as to complete connection of the speech separation stage and the phoneme recognition stage, to implement an end-to-end speech recognition system. On this basis, the first subnetwork, the second subnetwork, and the third subnetwork are jointly trained, to reduce impact of signal errors and signal distortions introduced in the speech separation stage on performance of the phoneme recognition stage. Therefore, in the method provided in this exemplary embodiment, the speech recognition performance under the complex interference sound conditions may be improved to improve user experience. In addition, the first subnetwork and the third subnetwork in this exemplary embodiment can easily integrate the third-party algorithm and have higher flexibility.

In another embodiment, the above steps are described more specifically below.

Step S310: Obtain a piece of sample data, the piece of sample data including a mixed speech spectrum and a labeled phoneme of the mixed speech spectrum.

In this exemplary embodiment, multiple pieces of sample data may be first obtained, and each piece of sample data may include a mixed speech and a labeled phoneme of the mixed speech. The mixed speech may be a speech signal that is interfered with by non-stationary noise such as background music or multi-speaker interference, resulting in occurrence of voice aliasing of different sound sources. Consequently, a received speech is a mixed speech. Labeled phonemes of the mixed speech indicate which phonemes are included in the mixed speech. A phoneme labeling method may be a manual labeling method, or a historical recognition result may be used as the labeled phoneme, which is not particularly limited in this exemplary embodiment. In addition, each piece of sample data may further include a reference speech corresponding to the mixed speech. The reference speech may be, for example, a monophonic voice signal received when a speaker speaks in a quiet environment or in a stationary noise interference environment. Certainly, the reference speech may alternatively be pre-extracted from the mixed speech by using another method such as clustering.

After obtaining the mixed speech and the reference speech, the mixed speech and the reference speech may be framed according to a specific frame length and a frame shift, to obtain speech data of the mixed speech in each frame and speech data of the reference speech in each frame. Next, a spectrum feature of mixed speech data and a spectrum feature of reference speech data may be extracted. For example, in this exemplary embodiment, the spectrum feature of the mixed speech data and the spectrum feature of the reference speech data may be extracted based on a Short Time Fourier Transform (STFT) or another manner.

For example, in this exemplary embodiment, mixed speech data in the $n^{th}$ frame may be represented as $x(n)$, and the mixed speech data $x(n)$ may be considered as a linear superposition of target speech data $\hat{s}_S(n)$ and interference speech data $S_I(n)$, that is $x(n) = \hat{s}_S(n) + s_I(n)$, and the reference speech data may be represented as $s_S(n)$. After the Short Time Fourier Transform is performed on the mixed speech data $x(n)$ and the reference speech data $s_S(n)$, a logarithm of a result of the Short Time Fourier Transform is taken, to obtain the spectrum features of the mixed speech data and reference speech data. For example, a mixed speech spectrum of the mixed speech data is represented as a $T \times F$-dimensional vector $x$, and a reference speech spectrum of the mixed speech data is represented as a $T \times F$-dimensional vector $S_s$, T being a total quantity of frames, and F being a quantity of frequency bands per frame.

Step S320: Extract a target speech spectrum from the mixed speech spectrum by using the first subnetwork.

In this exemplary embodiment, an example in which the target speech spectrum is extracted by using a method based on an Ideal Ratio Mask (IRM) is used for description. However, this exemplary embodiment is not limited thereto. In other exemplary embodiments of this disclosure, the target speech spectrum may alternatively be extracted by using other methods. Referring to FIG. 4, in this exemplary embodiment, the target speech spectrum may be extracted through the following steps S410 to S440.

Step S410: Embed the mixed speech spectrum into a multi-dimensional vector space to obtain embedding vectors, corresponding to time-frequency windows, of the mixed speech spectrum.

For example, in this exemplary embodiment, the mixed speech spectrum may be embedded into a K-dimensional vector space by using a deep neural network model. For example, the foregoing deep neural network may include multiple layers of bidirectional Long Short-Term Memory (BiLSTM) networks, for example, four layers of bidirectional Long Short-Term Memory networks having a peephole connection. Each layer of bidirectional Long Short-Term Memory network may include 600 hidden nodes. Certainly, the deep neural network may alternatively be replaced with various other effective network models, for example, a model obtained by combining a Convolutional Neural Network (CNN) and another network structure, or another model such as a time delay network or a gated Convolutional Neural Network. A model type and a topology of the deep neural network are not limited in this disclosure.

Using a bidirectional Long Short-Term Memory network as an example, the bidirectional Long Short-Term Memory network can map the mixed speech spectrum from a vector space $\mathbb{R}^{TF}$ to a higher-dimensional vector space $\mathbb{R}^{TF \times K}$. Specifically, an obtained embedding matrix $V$ for the mixed speech spectrum is as follows:

$$\mathbf{V} = \varphi_{BiLSTM}\left(\mathbf{x}; \Theta_{extract}\right) \in \mathbb{R}^{TF \times K}$$

where $\Theta_{extract}$ represents a network parameter of a bidirectional Long Short-Term Memory network $\varphi_{BiLSTM}$ ( ), and an embedding vector corresponding to each time-frequency window is $V_{f,t}$, where $t \in [1, T]$, and $f \in [1,F]$.

Step S420: Weight the embedding vectors of the mixed speech spectrum by using an ideal ratio mask, to obtain an attractor corresponding to the target speech spectrum.

For example, in this exemplary embodiment, the Ideal Ratio Mask $m_S$ may be calculated through $|s_s|/|x|$, and then, the Ideal Ratio Mask $m_S$ may be used to weight the embedding vectors of the mixed speech spectrum, to obtain an attractor $a_S$ corresponding to the target speech spectrum, where the attractor $a_S \in \mathbb{R}^K$. In addition, to remove noise of a low-energy spectrum window to obtain an effective frame, in this exemplary embodiment, a supervision label w may further be set, where the supervision label $\mathbf{w} \in \mathbb{R}^{TF}$. By using the supervision label w, a spectrum of the speech spectrum in each frame can be compared with a spectrum threshold. If an amplitude of a spectrum of the speech spectrum in a specific frame is less than the spectrum threshold, a value of a supervision label of the spectrum in the frame is 0; otherwise, the value is 1. Using an example in which a spectrum threshold is $max(\mathbf{x})/100$, the supervision label $\mathbf{w}$ may be as follows:

$$\mathbf{w}_{t,f} = \begin{cases} 0, & \text{if } \mathbf{x}_{t,f} < max(\mathbf{x})/100 \\ 1, & \text{else} \end{cases}$$

Correspondingly, the attractor $\mathbf{a_S}$ corresponding to the target speech spectrum may be as follows:

$$\mathbf{a_S} = \frac{\mathbf{V}^{\mathrm{T}}(\mathbf{m_S} \odot \mathbf{w})}{\sum\limits_{t=1}^{T}\sum\limits_{f=1}^{F}(\mathbf{m_S} \odot \mathbf{w})}$$

where $\odot$ represents an element multiplication of a matrix.

Step S430: Calculate similarities between each of the embedding vectors of the mixed speech spectrum and the attractor to obtain a target masking matrix corresponding to the target speech spectrum.

For example, in this exemplary embodiment, distances between each of the embedding vectors of the mixed speech and the attractor may be calculated, and values of the distances are mapped into a range of [0, 1], to represent the similarities between each of the embedding vectors and the attractor. For example, the similarities between each of the embedding vectors $\mathbf{V}_{f,t}$ of the mixed speech and the attractor $\mathbf{a_S}$ are calculated through the following formula, to obtain a target masking matrix $\hat{\mathbf{m}}_{\mathbf{S}}$ corresponding to the target speech spectrum:

$$\hat{\mathbf{m}}_{\mathbf{S}} = Sigmoid(\mathbf{Va_S})$$

Sigmoid is a sigmoid function and can map a variable to the range of [0, 1], thereby facilitating the subsequent extraction of the target speech spectrum. In addition, in other exemplary embodiments of this disclosure, the similarities between each of the embedding vectors of the mixed speech and the attractor may be calculated based on a tanh function or another manner, to obtain the target masking matrix corresponding to the target speech spectrum, which also belongs to the protection scope of this disclosure.

Step S440: Extract the target speech spectrum from the mixed speech spectrum based on the target masking matrix.

In this exemplary embodiment, the mixed speech spectrum $\mathbf{x}$ may be weighted by using the target masking matrix $\hat{\mathbf{m}}_{\mathbf{S}}$, to extract the target speech spectrum from the mixed speech spectrum time-frequency window by time-frequency window. For a mixed speech spectrum $\mathbf{x}_{f,t}$ corresponding to a specific time-frequency window, a greater target masking matrix indicates that more spectrum information corresponding to the time-frequency window is extracted. For example, the target speech spectrum $\hat{\mathbf{s}}_{\mathbf{s}}$ may be extracted through the following formula:

$$\hat{\mathbf{s}}_{\mathbf{s}} = \mathbf{x} \odot \hat{\mathbf{m}}_{\mathbf{S}}$$

In addition, in this exemplary embodiment, attractors calculated during training pieces of sample data respectively may further be obtained, and a mean value of the attractors is calculated to obtain a global attractor used for extracting the target speech spectrum during a test phase.

Step S330: Adaptively transforming the target speech spectrum by using the second subnetwork, to obtain an intermediate transition representation.

In this exemplary embodiment, the second subnetwork is used for connecting the foregoing first subnetwork and the following third subnetwork, an input of the second subnetwork is a target speech spectrum (hereinafter denoted as S, $S = \{S_1, S_2, ..., S_T\}$) extracted by the first subnetwork, and a final training objective of the intermediate transition representation outputted by the second subnetwork is to minimize a recognition loss of the third subnetwork. Based on this, in this exemplary embodiment, target speech spectrum corresponding to time-frequency windows are adaptively transformed according to a sequence of the time-frequency windows corresponding to the target speech spectrum. A transformation process of the adaptively transforming for one of the time-frequency windows includes: generating a piece of hidden state information for a current transformation process according to the target speech spectrum corresponding to the time-frequency window targeted by the current transformation process and a piece of hidden state information for a previous transformation process; and obtaining, based on the pieces of hidden state information, the intermediate transition representation corresponding to the time-frequency window targeted by the current transformation process. The transformation process is described in detail below by using a Long Short-Term Memory (LSTM) network as an example.

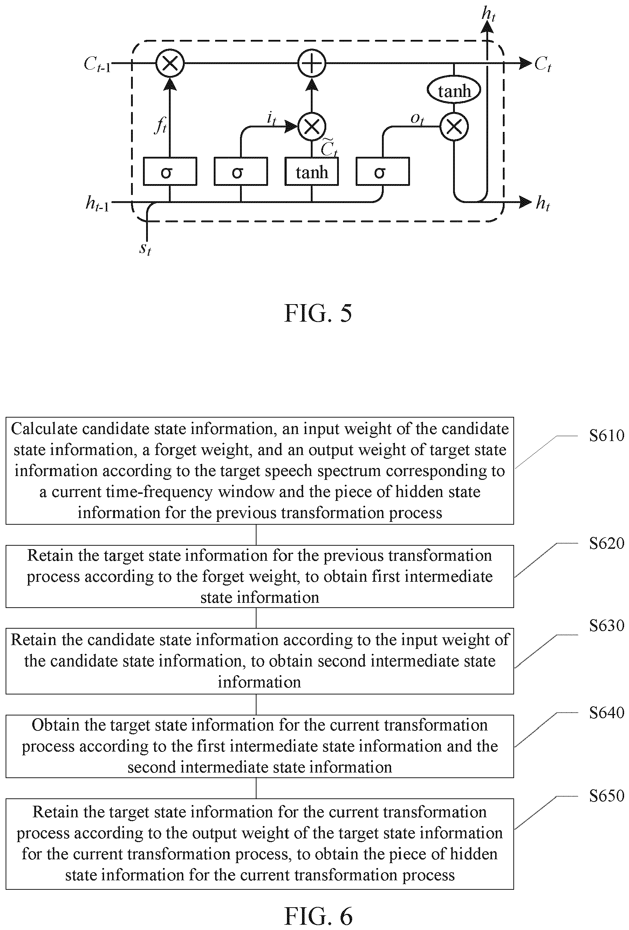

Referring to FIG. 5, the LSTM network is a processing unit (hereinafter referred to as an LSTM unit for short). The LSTM unit usually includes a forget gate, an input gate, and an output gate. In this exemplary embodiment, one transformation process may be performed by using one LSTM unit. FIG. 6 is a process in which one LSTM unit generates a piece of hidden state information for a current transformation process, which may include the following steps S610 to S650.

Step S610: Calculate candidate state information, an input weight of the candidate state information, a forget weight of target state information for the previous transformation process, and an output weight of target state information for the current transformation process according to the target speech spectrum corresponding to a current time-frequency window and the piece of hidden state information for the previous transformation process. Details are as follows.

The forget gate is used for determining how much information is discarded from the target state information for the previous transformation process. Therefore, the forget weight is used for representing a weight of the target state information for the previous transformation process that is not forgotten (that is, can be retained). The forget weight may be substantially a weight matrix. For example, the target speech spectrum corresponding to the current time-frequency window and the piece of hidden state information for the previous transformation process may be encoded by using an activation function used for representing the forget gate and mapped to a value between 0 and 1, to obtain the forget weight of the target state information for the previous transformation process, where 0 means being completely discarded, and 1 means being completely retained. For example, a forget weight $f_t$ of the target state information for the previous transformation process may be calculated according to the following formula:

$$f_t = \sigma \left( W_f \bullet [h_{t-1}, S_t] + b_f \right)$$

where $h_{t-1}$ represents the piece of hidden state information for the previous transformation process, $S_t$ represents the target speech spectrum corresponding to the current time-frequency window, $\sigma$ represents an activation function, that is, a Sigmod function, $W_f$ and $b_f$ represent parameters of the Sigmod function in the forget gate, and $[h_{t-1}, S_t]$ represents combining $h_{t-1}$ and $S_t$.

The input gate is used for determining how much information is important and needs to be retained in the currently inputted target speech spectrum. For example, the target speech spectrum corresponding to the current time-frequency window and the piece of hidden state information for the previous transformation process may be encoded by using an activation function representing the input gate, to obtain the candidate state information and the input weight of the candidate state information, the input weight of the candidate state information being used for determining how much new information in the candidate state information may be added to the target state information.

For example, the candidate state information $\tilde{C}_t$ may be calculated according to the following formula:

$$\tilde{C}_t = \tanh \left( W_c \bullet [h_{t-1}, S_t] + b_c \right)$$

where tanh represents that the activation function is a hyperbolic tangent function, and $W_c$ and $b_c$ represent parameters of the tanh function in the input gate.

An input weight $i_t$ of the candidate state information may be calculated according to the following formula:

$$i_t = \sigma \left( W_i \bullet [h_{t-1}, S_t] + b_i \right)$$

where $\sigma$ represents the activation function, that is, the Sigmod function, and $W_i$ and $b_i$ represent parameters of the Sigmod function in the input gate.

The output gate is used for determining what information needs to be included in the piece of hidden state information outputted to a next LSTM unit. For example, the target speech spectrum corresponding to the current time-frequency window and the piece of hidden state information for the previous transformation process may be encoded by using an activation function representing the output gate, to obtain the output weight of the target state information for the current transformation process. For example, the candidate state information $O_t$ may be calculated according to the following formula:

$$o_t = \sigma \left( W_o \bullet [h_{t-1}, S_t] + b_o \right)$$

where $\sigma$ represents the activation function, that is, the Sigmod function, and $W_o$ and $b_o$ represent parameters of the Sigmod function in the output gate.

Step S620: Retain the target state information for the previous transformation process according to the forget weight, to obtain first intermediate state information. For example, the obtained first intermediate state information may be $f_t \otimes C_{t-1}$, $C_{t-1}$ representing the target state information for the previous transformation process.

Step S630: Retain the candidate state information according to the input weight of the candidate state information, to obtain second intermediate state information. For example, the obtained second intermediate state information may be $i_t \otimes \overline{C}_t$.

Step S640: Obtain the target state information for the current transformation process according to the first intermediate state information and the second intermediate state information. For example, the target state information for the current transformation process is $C_t = f_t \otimes C_{t-1} + i_t \otimes \tilde{C}_t$

Step S650: Retain the target state information for the current transformation process according to the output weight of the target state information for the current transformation process, to obtain the piece of hidden state information for the current transformation process. For example, the piece of hidden state information for the current transformation process is $h_t = o_t \otimes \tanh (C_t)$

Further, in the foregoing adaptive transformation, target speech spectrum corresponding to time-frequency windows are adaptively transformed in sequence to obtain a piece of hidden state information $h_t$, that is, adaptive transformation performed by using a forward LSTM. In this exemplary embodiment, adaptive transformation may alternatively be performed by using a bi-directional Long Short-Term Memory (BiLSTM) network. Still further, in other exemplary embodiments, adaptive transformation may alternatively be performed by using multiple layers of bidirectional Long Short-Term Memory networks having a peephole connection, thereby further improving accuracy of the adaptive transformation. Based on the foregoing adaptive transformation process, the target speech spectrum corresponding to the time-frequency windows are adaptively transformed in reverse sequence to obtain a piece of hidden state information $\tilde{h}_t$, and the piece of hidden state information $h_t$ is spliced with the piece of hidden state information $\tilde{h}_t$ to obtain an output of the BiLSTM network, that is, the piece of hidden state information $H_t$, so as to better represent a bidirectional timing dependence feature by using the piece of hidden state information $H_t$.

To enable the piece of hidden state information $H_t$ to better adapt to the subsequent third subnetwork, in this exemplary embodiment, one or more of the following processing may be performed on each piece of hidden state information, to obtain the intermediate transition representation corresponding to the time-frequency window targeted by the current transformation process. The following examples are provided.

In a standard computing process of a fbank feature, an inputted frequency spectrum is squared, so that the fbank feature obtained is definitely non-negative. To match non-negativity of the fbank feature, in this exemplary embodiment, the output of the BiLSTM network may be squared, thereby implementing non-negative mapping. In addition, in other exemplary embodiments of this disclosure, non-negative mapping may alternatively be implemented by using a Rectified Linear Unit (ReLU) function or another manner, which is not particularly limited in this exemplary embodiment. For example, a non-negative mapping result may be as follows:

$$\hat{\mathbf{f}} = \varphi_{BiLSTM}(S; \Theta_{\text{adapt}})^2 \in \mathbb{R}_+^{TD}$$

where D represents a dimension of the intermediate transition representation, and $\Theta_{\text{adapt}}$ represents a network parameter of a bidirectional Long Short-Term Memory network $\varphi_{BiLSTM}( )$.

After the non-negative mapping is performed, a series of differentiable operations such as element-wise logarithm finding, calculation of a first-order difference, and calculation of a second-order difference may further be performed on $\hat{\mathbf{f}}$. In addition, alternatively, global mean variance normalization may be performed, and features corresponding to a previous time-frequency window and a next time-frequency window are added. For example, for a current time-frequency window, a feature corresponding to the current time-frequency window, features corresponding to $W$ time-frequency windows before the current time-frequency window, and features corresponding to $W$ time-frequency windows after the current time-frequency window, that is, features corresponding to a total of $2W + 1$ time-frequency windows are spliced, to obtain an intermediate transition representation corresponding to the current time-frequency window, and an intermediate transition representation

$\mathbf{f} \in \mathbb{R}_+^{3D(2W+1)}$ is obtained after the foregoing processing. In other exemplary embodiments of this disclosure, a part of the processing process may alternatively be selected from the foregoing processing process for execution, and other manners may alternatively be selected for processing, which also belong to the protection scope of this disclosure.

Step S340: Perform phoneme recognition on the intermediate transition representation by using the third subnetwork.

In this exemplary embodiment, the intermediate transition representation $\mathbf{f}$ outputted by the second subnetwork may be inputted to the third subnetwork, to obtain a posterior probability $y_t$ of a phoneme included in the intermediate transition representation. For example, the third subnetwork may be a Convolutional Long-Short-Term-Memory Deep-Neural-Network (CLDNN) based on Center-Loss-optimal, which is may be denoted as a CL_CLDNN network below. After the intermediate transition representation $\mathbf{f}$ is inputted to the CL_CLDNN network, operations shown in the following formulas may be performed:

$$\mathbf{u} = \varphi_{\text{CL\_CLDNN}}(\mathbf{f}; \Gamma)$$

$$y_t = \text{Softmax}(W\mathbf{u}_t + b)$$

where $\mathbf{u}_t$ is an output of the $t$ th frame of the penultimate layer (for example, the penultimate layer of multiple fully connected layers described below) of the CL_CLDNN network, Softmax $(z) = e^z /\|e^z\|_1$ may be used for calculating the posterior probability of the phoneme, and $\Theta_{\text{recog}} = \{\Gamma, W, b\}$ represents a parameter of the CL_CLDNN network.

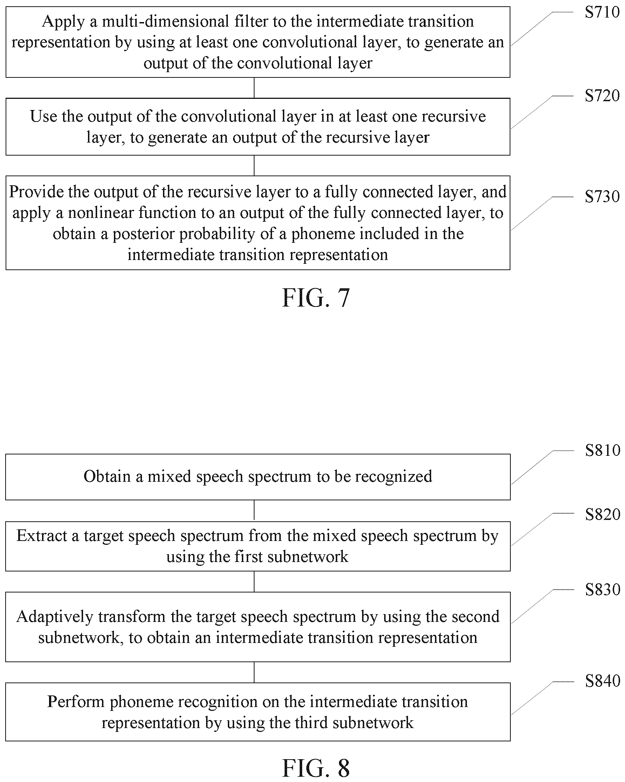

A specific processing process of the CL_CLDNN network is described below. Referring to FIG. 7, the third subnetwork may perform phoneme recognition based on the intermediate transition representation through the following steps S710 to S730.

Step S710: Apply a multi-dimensional filter to the intermediate transition representation by using at least one convolutional layer, to generate an output of the convolutional layer, so as to reduce a spectrum difference. For example, in this exemplary embodiment, two convolutional layers may be included, and each convolutional layer may include 256 feature maps. A $9 \times 9$ time domain-frequency domain filter may be used at the first convolutional layer, and a $4 \times 3$ time domain-frequency domain filter may be used at the second conventional layer. In addition, because an output dimension of the last convolutional layer may be very large, in this exemplary embodiment, a linear layer may be connected after the last convolutional layer for dimension reduction.

Step S720: Use the output of the convolutional layer in at least one recursive layer, to generate an output of the recursive layer, so as to realize time series feature modeling. For example, in this exemplary embodiment, the recursive layer may include multiple layers of Long Short-Term Memory networks, for example, two layers of Long Short-Term Memory networks may be connected after the linear layer, and each Long Short-Term Memory network may use 832 processing units and 512-dimensional mapping layers for dimension reduction. In other exemplary embodiments of this disclosure, the recursive layer may alternatively include, for example, a Gated Recurrent Unit (GRU) network or another Recurrent Neural Networks (RNN) structure, which is not particularly limited in this exemplary embodiment.

Step S730: Provide the output of the recursive layer to at least one fully connected layer, and apply a nonlinear function to an output of the fully connected layer, to obtain a posterior probability of a phoneme included in the intermediate transition representation. In this exemplary embodiment, the fully connected layer may be, for example, a two-layer Deep Neural Network (DNN) structure. Each DNN structure may include 1024 neurons, and through the DNN structure, a feature space may be mapped to an output layer that is easier to be classified. The output layer may be classified by using a nonlinear function such as the **Softmax** function or the tanh function, to obtain the posterior probability of the phoneme included in the intermediate transition representation.

Step S350: Update parameters of the first subnetwork, the second subnetwork, and the third subnetwork according to a result of the phoneme recognition and the labeled phoneme.

For example, in this exemplary embodiment, a joint loss function of the first subnetwork, the second subnetwork, and the third subnetwork may be first determined. For example, in this exemplary embodiment, the Center-Loss-optimal and a cross-entropy loss may be used as the joint loss function. Certainly, in other exemplary embodiments of this disclosure, other losses may alternatively be used as the joint loss function, and this exemplary embodiment is not limited thereto.

After the joint loss function is determined, the result of the phoneme recognition and the labeled phoneme may be inputted to the joint loss function to calculate a value of the joint loss function. After the value of the joint loss function is obtained, the parameters of the first subnetwork, the second subnetwork, and the third subnetwork are updated according to the value of the joint loss function. For example, a training objective may be to minimize the value of the joint loss function, and the parameters of the first subnetwork, the second subnetwork, and the third subnetwork are updated by using the methods such as Stochastic Gradient Descent (SGD) and Back Propagation (BP) until convergence. For example, the convergence means that a quantity of training iterations reaches a maximum quantity of times or the value of the joint loss function no longer decreases.

This exemplary embodiment further provides a speech recognition method based on a neural network, and the neural network may be obtained through training by using the training method in the foregoing exemplary embodiment. The speech recognition method may be applied to one or more of the terminal devices 101, 102, and 103, or may be applied to the server 105. Referring to FIG. 8, the speech recognition method may include the following steps S810 to S840.

Step S810: Obtain a mixed speech spectrum to be recognized.

In this exemplary embodiment, a mixed speech may be a speech signal that is interfered by non-stationary noise such as background music or multi-speaker interference, so that speech aliasing of different sources occurs, and received speech is the mixed speech. After obtaining the mixed speech, framing processing may be performed on the mixed speech according to a specific frame length and frame shift, to obtain speech data of the mixed speech in each frame. Next, a spectrum feature of mixed speech data may be extracted. For example, in this exemplary embodiment, the spectrum feature of the mixed speech data may be extracted based on Short Time Fourier Transform (STFT) or other manners.

For example, in this exemplary embodiment, mixed speech data in the $n^{th}$ frame may be represented as $x(n)$, the mixed speech data $x(n)$ may be considered as a linear superposition of target speech data $\hat{s}_S(n)$ and interference speech data $s_I(n)$, that is $x(n) = \hat{s}_S(n) + s_I(n)$. After the Short Time Fourier Transform is performed on the mixed speech data $x(n)$, a logarithm of a result obtained through the Short Time Fourier Transform is taken to obtain the spectrum features of the mixed speech data. For example, a mixed speech spectrum of the mixed speech data is represented as a $T \times F$ dimensional vector $\mathbf{x}$, $T$ being a total quantity of frames, and $F$ being a quantity of frequency bands per frame.

Step S820: Extract a target speech spectrum from the mixed speech spectrum by using the first subnetwork.

In this exemplary embodiment, an example in which the target speech spectrum is extracted by using a method based on an Ideal Ratio Mask (IRM) is used for description. However, this exemplary embodiment is not limited thereto. In other exemplary embodiments of this disclosure, the target speech spectrum may alternatively be extracted by using other methods. The following examples are provided.

First, the mixed speech spectrum is embedded into a multi-dimensional vector space, to obtain embedding vectors corresponding to time-frequency windows of the mixed speech spectrum. Using a bidirectional Long Short-Term Memory network as an example, the bidirectional Long Short-Term Memory network can map the mixed speech spectrum from a vector space $\mathbb{R}^{TF}$ to a higher-dimensional vector space $\mathbb{R}^{TF \times K}$. Specifi-

cally, an obtained embedding matrix **V** for the mixed speech spectrum is as follows:

$$\mathbf{V} = \varphi_{BiLSTM}\left(\mathbf{x}; \Theta_{extract}\right) \in \mathbb{R}^{TF \times K}$$

where $\Theta_{extract}$ represents a network parameter of a bidirectional Long Short-Term Memory network $\varphi_{PBiLSTM}(\ )$, and an embedding vector corresponding to each time-frequency window is $\mathbf{V}_{f,t}$, where $t \in [1, T]$, and $f \in [1, F]$.

Next, the global attractor $\bar{\mathbf{a}}_\mathbf{s}$ obtained in step S320 in the foregoing training process is obtained, and a target masking matrix corresponding to the target speech spectrum is obtained by calculating similarities between each of the embedding vectors of the mixed speech and the global attractor. For example, the similarities between each of the embedding vectors $\mathbf{V}_{f,t}$ of the mixed speech and the global attractor $\bar{\mathbf{a}}_\mathbf{s}$ are calculated through the following formula, to obtain a target masking matrix $\hat{\mathbf{m}}_\mathbf{s}$ corresponding to the target speech spectrum:

$$\hat{\mathbf{m}}_\mathbf{S} = Sigmoid\left(\mathbf{V}\bar{\mathbf{a}}_\mathbf{S}\right)$$

Subsequently, the target speech spectrum is extracted from the mixed speech spectrum based on the target masking matrix. For example, the target speech spectrum $\hat{\mathbf{s}}_\mathbf{s}$ may be extracted through the following formula:

$$\hat{\mathbf{s}}_\mathbf{S} = \mathbf{x} \odot \hat{\mathbf{m}}_\mathbf{S}$$

Step S830: Adaptively transform the target speech spectrum by using the second subnetwork, to obtain an intermediate transition representation.

In this exemplary embodiment, target speech spectrum corresponding to time-frequency windows may be adaptively transformed according to a sequence of the time-frequency windows corresponding to the target speech spectrum, and a transformation process of the adaptively transforming for one of the time-frequency windows may include: generating a piece of hidden state information for a current transformation process according to the target speech spectrum corresponding to the time-frequency window targeted by the current transformation process and a piece of hidden state information for a previous transformation process; and obtaining, based on the pieces of hidden state information, the intermediate transition representation corresponding to the time-frequency window targeted by the current transformation process. For example, in this exemplary embodiment, above transformation processes may be performed by using LSTM units of the bidirectional Long Short-Term Memory (BiLSTM) network.

To match non-negativity of the fbank feature, in this exemplary embodiment, an output of the BiLSTM network may further be squared, thereby implementing non-negative mapping. For example, a non-negative mapping result may be as follows:

$$\hat{\mathbf{f}} = \varphi_{BiLSTM}\left(S; \Theta_{adapt}\right)^2 \in \mathbb{R}_+^{TD}$$

where $D$ represents a dimension of the intermediate transition representation, and $\Theta_{adapt}$ represents a network parameter of a bidirectional Long Short-Term Memory network $\varphi_{BiLSTM}(\ )$.

After the non-negative mapping is performed, a series of differentiable operations such as element-wise logarithm finding, calculation of a first-order difference, and calculation of a second-order difference may further be performed on $\hat{\mathbf{f}}$. In addition, alternatively, global mean variance normalization may be performed, and features corresponding to a previous time-frequency window and a next time-frequency window are added. For example, for a current time-frequency window, a feature corresponding to the current time-frequency window, features corresponding to $W$ time-frequency windows before the current time-frequency window, and features corresponding to $W$ time-frequency windows after the current time-frequency window, that is, features corresponding to a total of $2W + 1$ time-frequency windows are spliced, to obtain an intermediate transition representation corresponding to the current time-frequency window, and an intermediate transition representation

$$\mathbf{f} \in \mathbb{R}_+^{3D(2W+1)}$$ is obtained after the foregoing processing.

Step S840: Perform phoneme recognition on the intermediate transition representation by using the third subnetwork.

In this exemplary embodiment, the intermediate transition representation **f** outputted by the second subnetwork may be inputted to the third subnetwork, to obtain a posterior probability $y_t$ of a phoneme included in the intermediate transition representation. For example, the third subnetwork may be a CL_CLDNN network. After the intermediate transition representation **f** is inputted to the CL_CLDNN network, operations shown in the following formulas may be performed:

$$\mathbf{u} = \varphi_{CL\_CLDNN}\left(\mathbf{f}; \Gamma\right)$$

$$y_t = \mathrm{Softmax}\left(W\mathbf{u}_t + b\right)$$

where $\mathbf{u}_t$ is an output of the $t$th frame of the penultimate layer (for example, the penultimate layer of multiple fully connected layers described below) of the CL_CLDNN network, **Softmax** $(\mathbf{z}) = e^\mathbf{z}/\|e^\mathbf{z}\|_1$ may be used for calculating the posterior probability of the phoneme, and $\Theta_{recog} = \{\Gamma, W, b\}$ represents a parameter of the CL_CLDNN network.

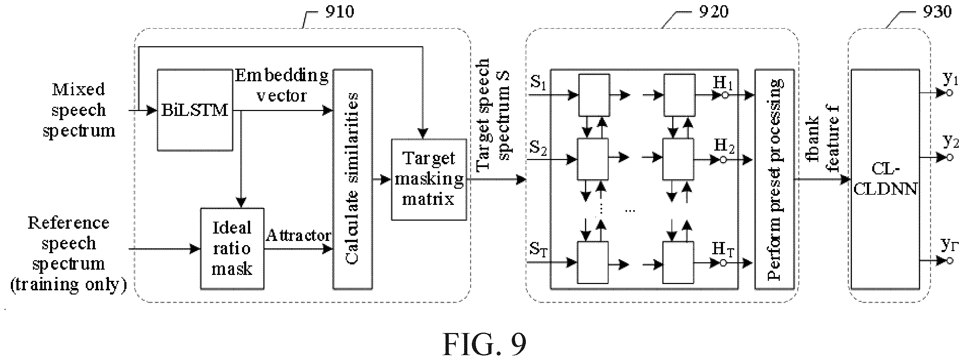

With reference to the embodiment of the foregoing method, description is made by using an example in which an automatic speech recognition system is implemented below. Referring to FIG. 9, the automatic speech recognition system may include a first subnetwork 910, a second subnetwork 920, and a third subnetwork 930.

The first subnetwork 910 may be configured to extract a target speech spectrum from a mixed speech spectrum. Referring to FIG. 9, the first subnetwork may include multiple layers (for example, four layers) of BiLSTM networks having a peephole connection, and each layer of the BiLSTM network may include 600 hidden nodes. Meanwhile, a fully connected layer may be connected after the last layer of the BiLSTM network to map a piece of 600-dimensional hidden state information into a 24,000-dimensional embedding vector. The mixed speech spectrum may be, for example, a 512-dimensional Short Time Fourier Transform spectrum feature with a sampling rate of 16,000 Hz, a frame length of 25 ms, and a frame shift of 10 ms. After the mixed speech spectrum is inputted to the first subnetwork 910, the mixed speech spectrum may be mapped to embedding vectors through the BiLSTM network, and then, similarities between each of the embedding vectors and an attractor may be calculated to obtain a target masking matrix, and further, a target speech spectrum S may be extracted from the mixed speech spectrum based on the target masking matrix. In a training stage, a reference speech spectrum may further be inputted to the first subnetwork 910, an Ideal Ratio Mask may be calculated according to the reference speech spectrum, and the embedding vectors of the mixed speech spectrum may be weighted according to the Ideal Ratio Mask, to obtain the attractor.

The second subnetwork 920 may be configured to adaptively transform the target speech spectrum, to obtain an intermediate transition representation. Referring to FIG. 9, the second subnetwork 920 may include multiple layers (for example, two layers) of BiLSTM networks having a peephole connection, and each layer of the BiLSTM network may include 600 hidden nodes. After the target speech spectrum S outputted by the first subnetwork is inputted to the BiLSTM network, hidden state information $H, H = \{H_1, H_1, ..., H_T\}$ outputted by the BiLSTM network may be obtained. Next, preset processing, such as non-negative mapping, element-wise logarithm finding, calculation of a first-order difference, calculation of a second-order difference, global mean variance normalization, and addition of features corresponding to a previous time-frequency window and a next time-frequency window, may be performed on the hidden state information $H$, to obtain the intermediate transition representation $\mathbf{f}$. In this exemplary embodiment, the intermediate transition representation $\mathbf{f}$ may be, for example, a 40-dimensional fbank feature vector.

The third subnetwork 930 may be used for performing phoneme recognition on the intermediate transition representation. Referring to FIG. 9, the third subnetwork 920 may include a CL_CLDNN network. After the intermediate transition representation $\mathbf{f}$ is inputted to the third subnetwork, a posterior probability $y_t$ of a phoneme included in the intermediate transition representation may be obtained. Using Chinese Mandarin as an example, posterior probabilities of approximately 12,000 categories of phonemes may be outputted.

During specific training, a batch size of pieces of sample data may be set to 24, an initial learning rate $\alpha$ is set to $10^{-4}$, a decay coefficient of the learning rate is set to 0.8, a convergence determining condition is set to that a comprehensive loss function value is not improved in three consecutive iterations, a dimension $K$ of the embedding vector is set to 40, a quantity D of Mel filter frequency bands is set to 40, a quantity $W$ of time-frequency windows during addition of features of previous and next time-frequency windows is set to 5, and a weight $\lambda$ of a center loss is set to 0.01. In addition, batch normalization may be performed on both a convolutional layer in the CL_CLDNN network and an output of an LSTM network, to implement faster convergence and better generalization.

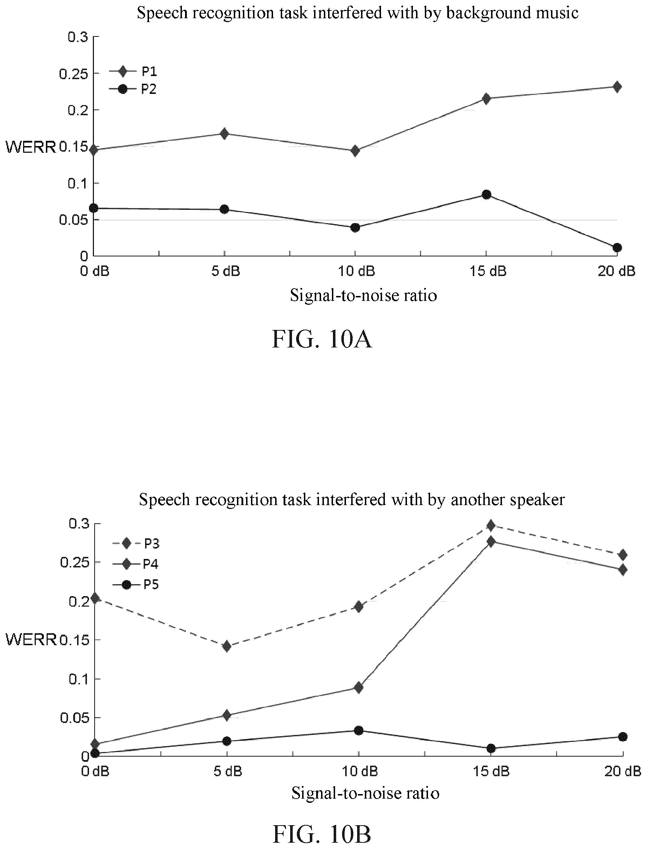

FIG. 10A and FIG. 10B are reference diagrams of a speech recognition effect of an automatic speech recognition system. FIG. 10A shows a speech recognition task interfered with by background music, and FIG. 10B is a speech recognition task interfered with by another speaker. In FIG. 10A and FIG. 10B, a vertical axis represents a recognition effect by using a Relative Word Error Rate Reduction (WERR), and a horizontal axis represents signal-to-noise ratio interference test conditions of different decibels (dB), where there are a total of five signal-to-noise ratios: 0 dB, 5 dB, 10 dB, 15 dB, and 20 dB.

In FIG. 10A and FIG. 10B, a line P1 and a line P4 represent WERRs obtained by comparing the automatic speech recognition system in this exemplary embodiment with a baseline system. A line P2 and a line P5 represent WERRs obtained by comparing an existing advanced automatic speech recognition system (for example, a robust speech recognition joint training architecture that uses a DNN to learn a Mel filter to affine a transformation function frame by frame) with the baseline system. A line P3 represents a WERR obtained by comparing the automatic speech recognition system in this exemplary embodiment combined with target speaker tracking with the baseline system.

The existing advanced automatic speech recognition system is equivalent to the automatic speech recognition system in this exemplary embodiment in terms of parameter complexity. However, it may be seen from FIG. 10A and FIG. 10B that in two recognition tasks, the WERR of the automatic speech recognition system in this exemplary embodiment is significantly better than that of the existing advanced automatic speech recognition system, indicating that the automatic speech recognition system in this exemplary embodiment can effectively model problems with temporal complexity, thereby further improving speech recognition performance under complex interference sound conditions.

In addition, in addition to the significant improvement in recognition performance, the automatic speech recognition system in this exemplary embodiment also has a high degree of flexibility, for example, allowing flexible integration of various speech separation modules and phoneme recognition modules into a first subnetwork and a third subnetwork, and the automatic speech recognition system in this exemplary embodiment is implemented without the cost of performance impairment of any individual module.

Therefore, the application of the automatic speech recognition system in this exemplary embodiment to multiple projects and product applications including smart speakers, smart TVs, online speech recognition systems, smart speech assistants, simultaneous interpretation, and virtual people can significantly improve accuracy of automatic speech recognition, especially recognition performance in a complex interference environment, thereby improving user experience.

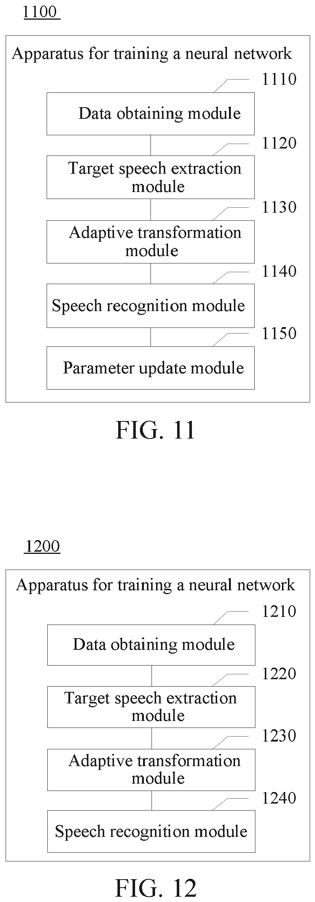

Further, in an exemplary embodiment, an apparatus of training a neural network for implementing speech recognition is further provided. The apparatus may be applied not only to a server but also to a terminal device. The neural network includes a first subnetwork to a third subnetwork. Referring to FIG. 11, the apparatus 1100 of training a neural network may include a data obtaining module 1110, a target speech extraction module 1120, an adaptive transformation module 1130, a speech recognition module 1140, and a parameter update module 1150.

The data obtaining module 1110 is configured to obtain a piece of sample data, the piece of sample data including a mixed speech spectrum and a labeled phoneme of the mixed speech spectrum.

The target speech extraction module 1120 is configured to extract a target speech spectrum from the mixed speech spectrum by using the first subnetwork.

The adaptive transformation module 1130 is configured to adaptively transform the target speech spectrum by using the second subnetwork, to obtain an intermediate transition representation.

The speech recognition module 1140 is configured to perform phoneme recognition on the intermediate transition representation by using the third subnetwork.

The parameter update module 1150 is configured to update parameters of the first subnetwork, the second subnetwork, and the third subnetwork according to a result of the phoneme recognition and the labeled phoneme.

In an exemplary embodiment of this disclosure, the target speech extraction module 1120 extracts the target speech spectrum from the mixed speech spectrum through the following steps: embedding the mixed speech spectrum into a multi-dimensional vector space to obtain embedding vectors, corresponding to time-frequency windows, of the mixed speech spectrum; weighting the embedding vectors of the mixed speech spectrum by using an ideal ratio mask, to obtain an attractor corresponding to the target speech spectrum; calculating similarities between each of the embedding vectors of the mixed speech spectrum and the attractor to obtain a target masking matrix corresponding to the target speech spectrum; and extracting the target speech spectrum from the mixed speech spectrum based on the target masking matrix.

In an exemplary embodiment of this disclosure, the apparatus further includes a global attractor computing module configured to obtain attractors corresponding to pieces of sample data respectively, and calculate a mean value of the attractors, to obtain a global attractor.

In an exemplary embodiment of this disclosure, the adaptive transformation module 1130 adaptively transforms the target speech spectrum through the following step: adaptively transforming the target speech spectrum corresponding to time-frequency windows in sequence according to a sequence of the time-frequency windows corresponding to the target speech spectrum. A transformation process of the adaptively transforming for one of the time-frequency windows includes: generating a piece of hidden state information for a current transformation process according to the target speech spectrum corresponding to the time-frequency window targeted by the current transformation process and a piece of hidden state information for a previous transformation process; and obtaining, based on the pieces of hidden state information, the intermediate transition representation corresponding to the time-frequency window targeted by the current transformation process.

In an exemplary embodiment of this disclosure, the adaptive transformation module 1130 generates the piece of hidden state information for the current transformation process through the following steps: calculating candidate state information, an input weight of the candidate state information, a forget weight of target state information for the previous transformation process, and an output weight of target state information for the current transformation process according to the target speech spectrum corresponding to a current time-frequency window and the piece of hidden state information for the previous transformation process; retaining the target state information for the previous transformation process according to the forget weight, to obtain first intermediate state information; retaining the candidate state information according to the input weight of the candidate state information, to obtain second intermediate state information; obtaining the target state information for the current transformation process according to the first intermediate state information and the second intermediate state information; and retaining the target state information for the current transformation process according to the output weight of the target state information for the current transformation process, to obtain the piece of hidden state information for the current transformation process.

In an exemplary embodiment of this disclosure, the adaptive transformation module 1130 obtains, based on the pieces of hidden state information, an intermediate transition representation corresponding to the time-frequency window targeted by the current transformation process through the following step: performing one or more of the following processing on the pieces of hidden state information, to obtain the intermediate transition representation corresponding to the time-frequency window targeted by the current transformation process: nonnegative mapping, element-wise logarithm finding, calculation of a first-order difference, calculation of a second-order difference, global mean variance normalization, and addition of features corresponding to a previous time-frequency window and a next time-frequency window.

In an exemplary embodiment of this disclosure, the speech recognition module 1140 performs phoneme recognition based on the intermediate transition representation through the following steps: applying a multi-dimensional filter to the intermediate transition representation by using at least one convolutional layer, to generate an output of the convolutional layer; using the output of the convolutional layer in at least one recursive layer, to generate an output of the recursive layer; and providing the output of the recursive layer to at least one fully connected layer, and applying a nonlinear function to an output of the fully connected layer, to obtain a posterior probability of a phoneme included in the intermediate transition representation.

In an exemplary embodiment of this disclosure, the recursive layer includes a long short-term memory network.

In an exemplary embodiment of this disclosure, the parameter update module 1150 updates the parameters of the first subnetwork, the second subnetwork, and the third subnetwork through the following steps: determining a joint loss function of the first subnetwork, the second subnetwork, and the third subnetwork; calculating a value of the joint loss function according to the result of the phoneme recognition, the labeled phoneme, and the joint loss function; and updating the parameters of the first subnetwork, the second subnetwork, and the third subnetwork according to the value of the joint loss function.

In an exemplary embodiment of this disclosure, the first subnetwork includes multiple layers of long short-term memory networks having a peephole connection, and the second subnetwork includes multiple layers of long short-term memory networks having a peephole connection.

Further, in this exemplary embodiment, a speech recognition apparatus based on a neural network is further provided. The speech recognition apparatus may be applied not only to a server but also to a terminal device. The neural network includes a first subnetwork to a third subnetwork. Referring to FIG. 12, the neural network training apparatus 1200 may include a data obtaining module 1210, a target speech extraction module 1220, an adaptive transformation module 1230, and a speech recognition module 1240.

The data obtaining module 1210 may be configured to obtain a mixed speech spectrum to be recognized.

The target speech extraction module 1220 may be configured to extract a target speech spectrum from the mixed speech spectrum by using the first subnetwork.

The adaptive transformation module 1230 may be configured to adaptively transform the target speech spectrum by using the second subnetwork, to obtain an intermediate transition representation.

The speech recognition module 1240 may be configured to perform phoneme recognition on the intermediate transition representation by using the third subnetwork.

In the method provided in this exemplary embodiment, the target speech spectrum extracted by using the first subnetwork is adaptively transformed by using the second subnetwork, to obtain the intermediate transition representation that may be inputted to the third subnetwork for phoneme recognition, so as to complete connection of the speech separation stage and the phoneme recognition stage, to implement an end-to-end speech recognition system. On this basis, the first subnetwork, the second subnetwork, and the third subnetwork are jointly trained, to reduce impact of signal errors and signal distortions introduced in the speech separation stage on performance of the phoneme recognition stage. Therefore, in the method provided in this exemplary embodiment, the speech recognition performance under the complex interference sound conditions may be improved to improve user experience. In addition, the first subnetwork and the third subnetwork in this exemplary embodiment can easily integrate the third-party algorithm and have higher flexibility.

Details of the modules or units in the apparatus have been specifically described in the corresponding exemplary method embodiment. Therefore, details are not described herein again.

Although several modules or units of a device for action execution are mentioned in the foregoing detailed descriptions, the division is not mandatory. Actually, according to the embodiments of this disclosure, the features and functions of two or more modules or units described above may be specified in one module or unit. Conversely, features and functions of one module or unit described above may be further divided into multiple modules or units to be specified.

According to another aspect, this disclosure further provides a computer-readable medium. The computer-readable medium may be included in the electronic device described in the foregoing embodiments, or may exist alone and is not disposed in the electronic device. The computer-readable medium carries one or more programs, the one or more programs, when executed by the electronic device, causing the electronic device to implement the method described in the foregoing embodiments. For example, the electronic device may implement steps in the foregoing exemplary embodiments.

The computer-readable medium according to this disclosure may be a computer-readable signal medium or a computer-readable storage medium or any combination of the two media. The computer-readable storage medium may be, for example, but is not limited to, an electric, magnetic, optical, electromagnetic, infrared, or semi-conductive system, apparatus, or component, or any combination thereof. More specifically, the computer-readable storage medium may include, for example, but is not limited to, an electrical connection having one or more wires, a portable computer disk, a hard disk, a random access memory (RAM), a read only memory (ROM), an erasable programmable read-only memory (EPROM or flash memory), an optical fiber, a portable compact disc read-only memory (CD-ROM), an optical storage device, a magnetic storage device, or any suitable combination of the foregoing. In this disclosure, the computer-readable storage medium may be any tangible medium including or storing a program, and the program may be used by or in combination with an instruction execution system, apparatus, or device. In this disclosure, a computer-readable signal medium may include a data signal being in a baseband or propagated as a part of a carrier wave, the data signal carrying computer-readable program code. Such a propagated data signal may be in multiple forms, including but not limited to an electromagnetic signal, an optical signal, or any suitable combination thereof. The computer-readable signal medium may be further any computer-readable medium in addition to a computer-readable storage medium. The computer-readable medium may send, propagate, or transmit a program that is used by or used in conjunction with an instruction execution system, an apparatus, or a device. The program code contained in the computer readable medium may be transmitted by using any appropriate medium, including but not limited to: a wireless medium, a wire, an optical cable, RF, any suitable combination thereof, or the like.

The flowcharts and block diagrams in the accompanying drawings illustrate possible system architectures, functions, and operations that may be implemented by a system, a method, and a computer program product according to various embodiments of this disclosure. In this regard, each box in a flowchart or a block diagram may represent a module, a program segment, or a part of code. The module, the program segment, or the part of code includes one or more executable instructions used for implementing designated logic functions. In some embodiments used as substitutes, functions annotated in boxes may alternatively occur in a sequence different from that annotated in an accompanying drawing. For example, actually two boxes shown in succession may be performed basically in parallel, and sometimes the two boxes may be performed in a reverse sequence. This is determined by a related function. Each box in a block diagram or a flowchart and a combination of boxes in the block diagram or the flowchart may be implemented by using a dedicated hardware-based system configured to perform a designated function or operation, or may be implemented by using a combination of dedicated hardware and a computer instruction.

This disclosure is not limited to the accurate structures that are described above and that are shown in the accompanying drawings, and modifications and changes may be made without departing from the scope of this disclosure. The scope of this disclosure is limited by the appended claims only.

**Claims**

1. A method of training a neural network for implementing speech recognition, the method being performed by an electronic device, the neural network comprising a first subnetwork, a second subnetwork, and a third subnetwork, the method comprising:

    obtaining a piece of sample data, the piece of sample data comprising a mixed speech spectrum and a labeled phoneme of the mixed speech spectrum (S310);
    extracting a target speech spectrum from the mixed speech spectrum by using the first subnetwork (S320), wherein the mixed speech spectrum is a spectrum feature of mixed speech data, the mixed speech data comprises target speech data and interference speech data, the target speech spectrum is a spectrum feature of the target speech data;
    adaptively transforming the target speech spectrum by using the second subnetwork, to obtain an intermediate transition representation (S330);
    performing phoneme recognition on the intermediate transition representation by using the third subnetwork (S340); and
    updating parameters of the first subnetwork, the second subnetwork, and the third subnetwork according to a result of the phoneme recognition and the labeled phoneme (S350),
    wherein the adaptively transforming the target speech spectrum by using the second subnetwork (S330) comprises:

        adaptively transforming the target speech spectrum corresponding to time-frequency windows in sequence according to a sequence of the time-frequency windows corresponding to the target speech spectrum, wherein a transformation process of the adaptively transforming for one of the time-frequency windows comprises:

generating a first piece of hidden state information for a current transformation process according to the target speech spectrum corresponding to the time-frequency window targeted by the current transformation process and a first piece of hidden state information for a previous transformation process; and

obtaining, based on the first pieces of hidden state information, the intermediate transition representation corresponding to the time-frequency window targeted by the current transformation process,

**characterized in that** the generating a first piece of hidden state information for a current transformation process comprises:

> calculating candidate state information, an input weight of the candidate state information, a forget weight of target state information for the previous transformation process, and an output weight of target state information for the current transformation process according to the target speech spectrum corresponding to a current time-frequency window and the first piece of hidden state information for the previous transformation process (S610);
> retaining the target state information for the previous transformation process according to the forget weight, to obtain first intermediate state information (S620);
> retaining the candidate state information according to the input weight of the candidate state information, to obtain second intermediate state information (S630);
> obtaining the target state information for the current transformation process according to the first intermediate state information and the second intermediate state information (S640); and
> retaining the target state information for the current transformation process according to the output weight of the target state information for the current transformation process, to obtain the first piece of hidden state information for the current transformation process (S650),
> wherein the method further comprises:
> adaptively transforming the target speech spectrum corresponding to the time-frequency windows in reverse sequence to obtain a second piece of hidden state information; splicing the first piece of hidden state information with the second piece of hidden state information to obtain a target piece of hidden state information; and using the target piece of hidden state information as the first piece of hidden state information.

2. The method of training a neural network according to claim 1, wherein the extracting a target speech spectrum from the mixed speech spectrum by using the first subnetwork comprises:

> embedding the mixed speech spectrum into a multi-dimensional vector space to obtain embedding vectors, corresponding to time-frequency windows, of the mixed speech spectrum (S410);
> weighting the embedding vectors of the mixed speech spectrum by using an ideal ratio mask, to obtain an attractor corresponding to the target speech spectrum (S420);
> calculating similarities between each of the embedding vectors of the mixed speech spectrum and the attractor to obtain a target masking matrix corresponding to the target speech spectrum (S430); and
> extracting the target speech spectrum from the mixed speech spectrum based on the target masking matrix (S440).

3. The method of training a neural network according to claim 2, further comprising:
obtaining attractors corresponding to pieces of sample data respectively, and calculating a mean value of the attractors, to obtain a global attractor.

4. The method of training a neural network according to claim 1, wherein the obtaining, based on the pieces of hidden state information, the intermediate transition representation corresponding to the time-frequency window targeted by the current transformation process comprises:
performing one or more of the following processing on the pieces of hidden state information, to obtain the intermediate transition representation corresponding to the time-frequency window targeted by the current transformation process:
non-negative mapping, element-wise logarithm finding, calculation of a first-order difference, calculation of a second-order difference, global mean variance normalization, and addition of features corresponding to a previous time-frequency window and a next time-frequency window.

5. The method of training a neural network according to claim 1, wherein the performing phoneme recognition on the intermediate transition representation by using the third subnetwork comprises:

applying a multi-dimensional filter to the intermediate transition representation by using at least one convolutional layer, to generate an output of the convolutional layer (S710);
using the output of the convolutional layer in at least one recursive layer, to generate an output of the recursive layer (S720); and
providing the output of the recursive layer to at least one fully connected layer, and applying a nonlinear function to an output of the fully connected layer, to obtain a posterior probability of a phoneme comprised in the intermediate transition representation (S730).

6. The method of training a neural network according to claim 5, wherein the recursive layer comprises a long short-term memory network.

7. The method of training a neural network according to claim 1, wherein the updating parameters of the first subnetwork, the second subnetwork, and the third subnetwork comprises:

determining a joint loss function of the first subnetwork, the second subnetwork, and the third subnetwork;
calculating a value of the joint loss function according to the result of the phoneme recognition, the labeled phoneme, and the joint loss function; and
updating the parameters of the first subnetwork, the second subnetwork, and the third subnetwork according to the value of the joint loss function.

8. The method of training a neural network according to any of claims 1 to 7, wherein the first subnetwork comprises a plurality of layers of long short-term memory networks having a peephole connection, and the second subnetwork comprises a plurality of layers of long short-term memory networks having a peephole connection.

9. A speech recognition method based on a neural network, the method being performed by an electronic device, the neural network comprising a first subnetwork, a second subnetwork, and a third subnetwork, the method comprising:

obtaining a mixed speech spectrum to be recognized (S810);
extracting a target speech spectrum from the mixed speech spectrum by using the first subnetwork (S820), wherein the mixed speech spectrum is a spectrum feature of mixed speech data, the mixed speech data comprises target speech data and interference speech data, the target speech spectrum is a spectrum feature of the target speech data;
adaptively transforming the target speech spectrum by using the second subnetwork, to obtain an intermediate transition representation (S830); and
performing phoneme recognition on the intermediate transition representation by using the third subnetwork (S840),
wherein the adaptively transforming the target speech spectrum by using the second subnetwork (S830) comprises:
adaptively transforming the target speech spectrum corresponding to time-frequency windows in sequence according to a sequence of the time-frequency windows corresponding to the target speech spectrum, wherein a transformation process of the adaptively transforming for one of the time-frequency windows comprises:

generating a first piece of hidden state information for a current transformation process according to the target speech spectrum corresponding to the time-frequency window targeted by the current transformation process and a first piece of hidden state information for a previous transformation process; and
obtaining, based on the first pieces of hidden state information, the intermediate transition representation corresponding to the time-frequency window targeted by the current transformation process,
**characterized in that** the generating a first piece of hidden state information for a current transformation process comprises:

calculating candidate state information, an input weight of the candidate state information, a forget weight of target state information for the previous transformation process, and an output weight of target state information for the current transformation process according to the target speech spectrum corresponding to a current time-frequency window and the first piece of hidden state information for the previous transformation process (S610);
retaining the target state information for the previous transformation process according to the forget weight, to obtain first intermediate state information (S620);
retaining the candidate state information according to the input weight of the candidate state information, to obtain second intermediate state information (S630);

obtaining the target state information for the current transformation process according to the first intermediate state information and the second intermediate state information (S640); and

retaining the target state information for the current transformation process according to the output weight of the target state information for the current transformation process, to obtain the first piece of hidden state information for the current transformation process (S650),

wherein the method further comprises: adaptively transforming the target speech spectrum corresponding to the time-frequency windows in reverse sequence to obtain a second piece of hidden state information; splicing the first piece of hidden state information with the second piece of hidden state information to obtain a target piece of hidden state information; and using the target piece of hidden state information as the first piece of hidden state information.

10. A computer-readable storage medium, storing a computer program, the computer program, when executed by a processor, implementing the method according to any one of claims 1 to 9.

11. An electronic device, comprising:

a processor; and
a memory, configured to store executable instructions of the processor,
the processor being configured to perform the method according to any one of claims 1 to 9 by executing the executable instructions.

**Patentansprüche**

1. Verfahren zum Trainieren eines neuronalen Netzes zum Implementieren von Spracherkennung, wobei das Verfahren von einer elektronischen Vorrichtung durchgeführt wird und das neuronale Netz ein erstes Teilnetz, ein zweites Teilnetz und ein drittes Teilnetz aufweist, und wobei das Verfahren umfasst:

Erhalten eines Teils von Probendaten, wobei der Teil von Probendaten ein gemischtes Sprachspektrum und ein markiertes Phonem des gemischten Sprachspektrums (S310) umfasst;
Extrahieren eines Zielsprachspektrums aus dem gemischten Sprachspektrum unter Verwendung des ersten Teilnetzes (S320), wobei das gemischte Sprachspektrum ein Spektrummerkmal von gemischten Sprachdaten ist, die gemischten Sprachdaten Zielsprachdaten und Interferenzsprachdaten umfassen und das Zielsprachspektrum ein Spektrummerkmal der Zielsprachdaten ist;
adaptives Transformieren des Zielsprachspektrums unter Verwendung des zweiten Teilnetzes, um eine Zwischenübergangsdarstellung (S330) zu erhalten;
Durchführen einer Phonemerkennung an der Zwischenübergangsdarstellung unter Verwendung des dritten Teilnetzes (S340); und
Aktualisieren von Parametern des ersten Teilnetzes, des zweiten Teilnetzes und des dritten Teilnetzes in Abhängigkeit von einem Ergebnis der Phonemerkennung und dem markierten Phonem (S350),
wobei das adaptive Transformieren des Zielsprachspektrums unter Verwendung des zweiten Teilnetzes (S330) umfasst:
der Reihe nach adaptives Transformieren des Zielsprachspektrums, das Zeit-Frequenz-Fenstern entspricht, gemäß einer Sequenz der Zeit-Frequenz-Fenster, die dem Zielsprachspektrum entspricht, wobei ein Transformationsprozess des adaptiven Transformierens für eines der Zeit-Frequenz-Fenster umfasst:

Erzeugen eines ersten Stücks verborgener Zustandsinformation für einen aktuellen Transformationsprozess gemäß dem Zielsprachspektrum, das dem Zeit-Frequenz-Fenster entspricht, auf das der aktuelle Transformationsprozess abzielt, und eines ersten Stücks verborgener Zustandsinformation für einen vorherigen Transformationsprozess; und
Erhalten der Zwischenübergangsdarstellung, die dem Zeit-Frequenz-Fenster entspricht, auf das der aktuelle Transformationsprozess abzielt, basierend auf den ersten Stücken verborgener Zustandsinformation,
**dadurch gekennzeichnet, dass** das Erzeugen eines ersten Stücks verborgener Zustandsinformation für einen aktuellen Transformationsprozess umfasst:

Berechnen einer Kandidatenzustandsinformation, eines Eingangsgewichts der Kandidatenzustandsinformation, eines Vergessensgewichts einer Zielzustandsinformation für den vorherigen Transformationsprozess und eines Ausgangsgewichts einer Zielzustandsinformation für den aktuellen Transformationsprozess gemäß dem Zielsprachspektrum, das einem aktuellen Zeit-Frequenz-Fenster entspricht, und dem ersten Stück verborgener Zustandsinformation für den vorherigen Transformationsprozess (S610);

Beibehalten der Zielzustandsinformation für den vorherigen Transformationsprozess gemäß dem Vergessensgewicht, um erste Zwischenzustandsinformation zu erhalten (S620);

Beibehalten der Kandidatenzustandsinformation entsprechend dem Eingabegewicht der Kandidatenzustandsinformation, um eine zweite Zwischenzustandsinformation zu erhalten (S630);

Erhalten der Zielzustandsinformation für den aktuellen Transformationsprozess gemäß der ersten Zwischenzustandsinformation und der zweiten Zwischenzustandsinformation (S640); und

Beibehalten der Zielzustandsinformation für den gegenwärtigen Transformationsprozess gemäß dem Ausgangsgewicht der Zielzustandsinformation für den gegenwärtigen Transformationsprozess, um das erste Stück verborgener Zustandsinformation für den gegenwärtigen Transformationsprozess zu erhalten (S650),

wobei das Verfahren ferner umfasst: adaptives Transformieren des Zielsprachspektrums, das den Zeit-Frequenz-Fenstern entspricht, in umgekehrter Reihenfolge, um ein zweites Stück verborgener Zustandsinformation zu erhalten; Spleißen des ersten Stücks verborgener Zustandsinformation mit dem zweiten Stück verborgener Zustandsinformation, um ein Zielstück verborgener Zustandsinformation zu erhalten; und Verwenden des Zielstücks verborgener Zustandsinformation als das erste Stück verborgener Zustandsinformation.

2. Verfahren zum Trainieren eines neuronalen Netzes nach Anspruch 1, wobei das Extrahieren eines Zielsprachspektrums aus dem gemischten Sprachspektrum unter Verwendung des ersten Teilnetzes umfasst:

Einbetten des gemischten Sprachspektrums in einen mehrdimensionalen Vektorraum, um Einbettungsvektoren, die Zeit-Frequenz-Fenstern entsprechen, des gemischten Sprachspektrums zu erhalten (S410);

Gewichten der Einbettungsvektoren des gemischten Sprachspektrums unter Verwendung einer Maske mit idealem Verhältnis, um einen Attraktor zu erhalten, der dem Zielsprachspektrum entspricht (S420);

Berechnen von Ähnlichkeiten zwischen jedem der Einbettungsvektoren des gemischten Sprachspektrums und dem Attraktor, um eine Zielmaskierungsmatrix zu erhalten, die dem Zielsprachspektrum entspricht (S430); und

Extrahieren des Zielsprachspektrums aus dem gemischten Sprachspektrum basierend auf der Zielmaskierungsmatrix (S440).

3. Verfahren zum Trainieren eines neuronalen Netzes nach Anspruch 2, ferner umfassend:
Erhalten von Attraktoren, die jeweils Teilen von Beispieldaten entsprechen, und Berechnen eines Mittelwerts der Attraktoren, um einen globalen Attraktor zu erhalten.

4. Verfahren zum Trainieren eines neuronalen Netzes nach Anspruch 1, wobei das Erhalten, basierend auf den Stücken verborgener Zustandsinformation, der Zwischenübergangsdarstellung, die dem Zeit-Frequenz-Fenster entspricht, auf das der aktuelle Transformationsprozess abzielt, umfasst:
Durchführen einer oder mehrerer der folgenden Verarbeitungen an den Stücken verborgener Zustandsinformation, um die Zwischenübergangsdarstellung zu erhalten, die dem Zeit-Frequenz-Fenster entspricht, auf das der aktuelle Transformationsprozess abzielt:
nicht-negatives Abbilden, elementweises Logarithmus-Finden, Berechnung einer Differenz erster Ordnung, Berechnung einer Differenz zweiter Ordnung, Normalisierung der globalen mittleren Varianz und Hinzufügen von Merkmalen, die einem vorherigen Zeit-Frequenz-Fenster und einem nächsten Zeit-Frequenz-Fenster entsprechen.

5. Verfahren zum Trainieren eines neuronalen Netzes nach Anspruch 1, wobei das Durchführen der Phonemerkennung an der Zwischenübergangsdarstellung unter Verwendung des dritten Teilnetzes umfasst:

Anwenden eines mehrdimensionalen Filters auf die Zwischenübergangsrepräsentation unter Verwendung mindestens einer Faltungsschicht, um eine Ausgabe der Faltungsschicht zu erzeugen (S710);

Verwenden der Ausgabe der Faltungsschicht in mindestens einer rekursiven Schicht, um eine Ausgabe der rekursiven Schicht zu erzeugen (S720); und

Bereitstellen der Ausgabe der rekursiven Schicht an mindestens eine vollständig verbundene Schicht und Anwenden einer nichtlinearen Funktion auf eine Ausgabe der vollständig verbundenen Schicht, um eine a posteriori Wahrscheinlichkeit eines Phonems zu erhalten, das in der Zwischentransformationsdarstellung enthalten ist (S730).

6.  Verfahren zum Trainieren eines neuronalen Netzes nach Anspruch 5, wobei die rekursive Schicht ein langes-Kurzzeitgedächtnis-Netz aufweist.

7.  Verfahren zum Trainieren eines neuronalen Netzes nach Anspruch 1, wobei das Aktualisieren von Parametern des ersten Teilnetzes, des zweiten Teilnetzes und des dritten Teilnetzes umfasst:

    Bestimmen einer gemeinsamen Verlustfunktion des ersten Teilnetzes, des zweiten Teilnetzes und des dritten Teilnetzes;
    Berechnen eines Wertes der gemeinsamen Verlustfunktion gemäß dem Ergebnis der Phonemerkennung, dem markierten Phonem und der gemeinsamen Verlustfunktion; und
    Aktualisieren der Parameter des ersten Teilnetzes, des zweiten Teilnetzes und des dritten Teilnetzes in Abhängigkeit von dem Wert der gemeinsamen Verlustfunktion.

8.  Verfahren zum Trainieren eines neuronalen Netzes nach einem beliebigen der Ansprüche 1 bis 7, wobei das erste Teilnetz eine Vielzahl von Schichten von langes-Kurzzeitgedächtnis-Netzen umfasst, die eine Gucklochverbindung aufweisen, und das zweite Teilnetz eine Vielzahl von Schichten von langes-Kurzzeitgedächtnis-Netzen umfasst, die eine Gucklochverbindung aufweisen.

9.  Spracherkennungsverfahren auf der Grundlage eines neuronalen Netzes, wobei das Verfahren von einer elektronischen Vorrichtung durchgeführt wird und das neuronale Netz ein erstes Teilnetz, ein zweites Teilnetz und ein drittes Teilnetz umfasst, und wobei das Verfahren umfasst:

    Erhalten eines zu erkennenden gemischten Sprachspektrums (S810);
    Extrahieren eines Zielsprachspektrums aus dem gemischten Sprachspektrum unter Verwendung des ersten Teilnetzes (S820), wobei das gemischte Sprachspektrum ein Spektrummerkmal von gemischten Sprachdaten ist, die gemischten Sprachdaten Zielsprachdaten und Interferenzsprachdaten umfassen, das Zielsprachspektrum ein Spektrummerkmal der Zielsprachdaten ist;
    adaptives Transformieren des Zielsprachspektrums unter Verwendung des zweiten Teilnetzes, um eine Zwischenübergangsdarstellung zu erhalten (S830); und
Durchführen einer Phonemerkennung an der Zwischenübergangsdarstellung unter Verwendung des dritten Teilnetzes (S840), wobei das adaptive Transformieren des Zielsprachspektrums unter Verwendung des zweiten Teilnetzes (S830) umfasst:
der Reihe nach adaptives Transformieren des Zielsprachspektrums, das Zeit-Frequenz-Fenstern entspricht, gemäß einer Sequenz der Zeit-Frequenz-Fenster, die dem Zielsprachspektrum entsprechen, wobei ein Transformationsprozess des adaptiven Transformierens für eines der Zeit-Frequenz-Fenster umfasst:

    Erzeugen eines ersten Stücks verborgener Zustandsinformation für einen aktuellen Transformationsprozess gemäß dem Zielsprachspektrum, das dem Zeit-Frequenz-Fenster entspricht, auf das der aktuelle Transformationsprozess abzielt, und eines ersten Stücks verborgener Zustandsinformation für einen vorherigen Transformationsprozess; und
    Erhalten der Zwischenübergangsdarstellung, die dem Zeit-Frequenz-Fenster entspricht, auf das der aktuelle Transformationsprozess abzielt, basierend auf den ersten Stücken verborgener Zustandsinformation,
    dadurch gekennzeichnet, dass das Erzeugen eines ersten Stücks verborgener Zustandsinformation für einen aktuellen Transformationsprozess umfasst
    Berechnen einer Kandidatenzustandsinformation, eines Eingangsgewichts der Kandidatenzustandsinformation, eines Vergessensgewichts einer Zielzustandsinformation für den vorherigen Transformationsprozess und eines Ausgangsgewichts einer Zielzustandsinformation für den aktuellen Transformationsprozess gemäß dem Zielsprachspektrum, das einem aktuellen Zeit-Frequenz-Fenster entspricht, und dem ersten Stück verborgener Zustandsinformation für den vorherigen Transformationsprozess (S610);
    Beibehalten der Zielzustandsinformation für den vorherigen Transformationsprozess gemäß dem Vergessensgewicht, um erste Zwischenzustandsinformation zu erhalten (S620);
    Beibehalten der Kandidaten-Zustandsinformation entsprechend dem Eingabegewicht der Kandidatenzustandsinformation, um eine zweite Zwischenzustandsinformation zu erhalten (S630);
    Erhalten der Zielzustandsinformation für den aktuellen Transformationsprozess gemäß der ersten Zwischenzustandsinformation und der zweiten Zwischenzustandsinformation (S640); und

Beibehalten der Zielzustandsinformation für den gegenwärtigen Transformationsprozess gemäß dem Ausgangsgewicht der Zielzustandsinformation für den gegenwärtigen Transformationsprozess, um das erste Stück verborgener Zustandsinformation für den gegenwärtigen Transformationsprozess zu erhalten (S650),

wobei das Verfahren ferner umfasst: adaptives Transformieren des Zielsprachspektrums, das den Zeit-Frequenz-Fenstern entspricht, in umgekehrter Reihenfolge, um ein zweites Stück verborgener Zustandsinformation zu erhalten; Spleißen des ersten Stücks verborgener Zustandsinformation mit dem zweiten Stück verborgener Zustandsinformation, um ein Zielstück verborgener Zustandsinformation zu erhalten; und Verwenden des Zielstücks verborgener Zustandsinformation als das erste Stück verborgener Zustandsinformation.

10. Computerlesbares Speichermedium, das ein Computerprogramm speichert, wobei das Computerprogramm, wenn es von einem Prozessor ausgeführt wird, das Verfahren nach einem beliebigen der Ansprüche 1 bis 9 implementiert.

11. Elektronische Vorrichtung, aufweisend:

einen Prozessor; und
einen Speicher, der zum Speichern von ausführbaren Befehlen des Prozessors ausgebildet ist, wobei der Prozessor so ausgebildet ist, dass er das Verfahren nach einem beliebigen der Ansprüche 1 bis 9 durch Ausführen der ausführbaren Anweisungen durchführt.

**Revendications**

1. Procédé d'entraînement d'un réseau neuronal pour mettre en oeuvre de la reconnaissance vocale, le procédé étant mis en oeuvre par un dispositif électronique, le réseau neuronal comprenant un premier sous-réseau, un deuxième sous-réseau et un troisième sous-réseau, le procédé comprenant:

obtenir une pièce de données d'échantillon, la pièce de données d'échantillon comprenant un spectre de parole mixte et un phonème étiqueté du spectre de parole mixte (S310);
extraire un spectre de parole cible du spectre de parole mixte en utilisant le premier sous-réseau (S320), dans lequel le spectre de parole mixte est une caractéristique spectrale de données de parole mixtes, les données de parole mixtes comprennent des données de parole cible et des données de parole d'interférence, le spectre de parole cible est une caractéristique spectrale des données de parole cibles;
transformer de manière adaptative le spectre de parole cible en utilisant le deuxième sous-réseau, pour obtenir une représentation de transition intermédiaire (S330);
effectuer une reconnaissance de phonème sur la représentation de transition intermédiaire en utilisant le troisième sous-réseau (S340); et
mettre à jour des paramètres du premier sous-réseau, du deuxième sous-réseau et du troisième sous-réseau en fonction d'un résultat de la reconnaissance de phonème et du phonème étiqueté (S350),

dans lequel la transformation adaptative du spectre de parole cible en utilisant le deuxième sous-réseau (S330) comprend:

transformer de manière adaptative, en séquence, le spectre de parole cible correspondant à des fenêtres temps-fréquence, selon une séquence des fenêtres temps-fréquence correspondant au spectre de parole cible, dans lequel un processus de transformation de la transformation adaptative pour l'une des fenêtres temps-fréquence comprend:

générer une première pièce d'information d'état cachée pour un processus de transformation actuel selon le spectre de parole cible correspondant à la fenêtre temps-fréquence ciblée par le processus de transformation actuel, et une première pièce d'information d'état cachée pour un processus de transformation précédent; et
obtenir, sur la base des premières pièces d'information d'état cachée, la représentation de transition intermédiaire correspondant à la fenêtre temps-fréquence ciblée par le processus de transformation actuel, **caractérisé par le fait que** la génération d'une première pièce d'information d'état cachée pour un processus de transformation actuel comprend:

calculer une information d'état candidat, un poids d'entrée de l'information d'état candidat, un poids d'oubli de l'information d'état cible pour le processus de transformation précédent, et un poids de sortie d'information d'état cible pour le processus de transformation actuel selon le spectre de parole cible correspondant à une fenêtre temps-fréquence actuelle et la première pièce d'information d'état cachée pour le processus de transformation précédent (S610);

conserver l'information d'état cible pour le processus de transformation précédent selon le poids d'oubli pour obtenir une première information d'état intermédiaire (S620);

conserver l'information d'état candidat selon le poids d'entrée de l'information d'état candidat pour obtenir une deuxième information d'état intermédiaire (S630);

obtenir l'information d'état cible pour le processus de transformation actuel selon la première information d'état intermédiaire et la deuxième information d'état intermédiaire (S640); et

conserver l'information d'état cible pour le processus de transformation actuel selon le poids de sortie de l'information d'état cible pour le processus de transformation actuel afin d'obtenir la première pièce d'information d'état cachée pour le processus de transformation actuel (S650),

le procédé comprenant en outre: transformer de manière adaptative, en séquence inverse, le spectre de parole cible correspondant aux fenêtres temps-fréquence pour obtenir une deuxième pièce d'information d'état cachée, épisser la première pièce d'information d'état cachée avec la deuxième pièce d'information d'état cachée pour obtenir une pièce cible d'information d'état cachée, et utiliser la pièce cible d'information d'état cachée en tant que première pièce d'information d'état cachée.

2. Procédé d'entraînement d'un réseau neuronal selon la revendication 1, dans lequel l'extraction d'un spectre de parole cible du spectre de parole mixte en utilisant le premier sous-réseau comprend:

intégrer le spectre de parole mixte dans un espace vectoriel multidimensionnel pour obtenir des vecteurs d'intégration correspondant à des fenêtres temps-fréquence, du spectre de parole mixte (S410);

pondérer les vecteurs d'intégration du spectre de parole mixte en utilisant un masque de rapport idéal pour obtenir un attracteur correspondant au spectre de parole cible (S420);

calculer des similarités entre chacun des vecteurs d'intégration du spectre de parole mixte et l'attracteur pour obtenir une matrice de masquage cible correspondant au spectre de parole cible (S430); et

extraire le spectre de parole cible du spectre de parole mixte sur la base de la matrice de masquage cible (S440).

3. Procédé d'entraînement d'un réseau neuronal selon la revendication 2, comprenant en outre:
obtenir des attracteurs correspondant respectivement à des pièces de données d'échantillon, et calculer une valeur moyenne des attracteurs pour obtenir un attracteur global.

4. Procédé d'entraînement d'un réseau neuronal selon la revendication 1, dans lequel l'obtention, sur la base des pièces d'information d'état cachée, de la représentation de transition intermédiaire correspondant à la fenêtre temps-fréquence ciblée par le processus de transformation actuel, comprend:
effectuer un ou plusieurs des traitements suivants sur les pièces d'information d'état cachée pour obtenir la représentation de transition intermédiaire correspondant à la fenêtre temps-fréquence ciblée par le processus de transformation actuel:
mappage non négatif, recherche de logarithme par éléments, calcul d'une différence de premier ordre, calcul d'une différence de deuxième ordre, normalisation de la variance moyenne globale et ajout de caractéristiques correspondant à une fenêtre temps-fréquence précédente et à une fenêtre temps-fréquence suivante.

5. Procédé d'entraînement d'un réseau neuronal selon la revendication 1, dans lequel la réalisation de la reconnaissance de phonème sur la représentation de transition intermédiaire en utilisant le troisième sous-réseau comprend:

appliquer un filtre multidimensionnel à la représentation de transition intermédiaire en utilisant au moins une couche convolutive pour générer une sortie de la couche convolutive (S710);

utiliser la sortie de la couche convolutive dans au moins une couche récursive pour générer une sortie de la couche récursive (S720); et

fournir la sortie de la couche récursive à au moins une couche entièrement connectée, et appliquer une fonction non linéaire à une sortie de la couche entièrement connectée pour obtenir une probabilité a posteriori d'un phonème compris dans la représentation de transition intermédiaire (S730).

6. Procédé d'entraînement d'un réseau neuronal selon la revendication 5, dans lequel la couche récursive comprend un réseau de longue mémoire à court terme.

**7.** Procédé d'entraînement d'un réseau neuronal selon la revendication 1, dans lequel la mise à jour de paramètres du premier sous-réseau, du deuxième sous-réseau et du troisième sous-réseau comprend:

déterminer une fonction de perte conjointe du premier sous-réseau, du deuxième sous-réseau et du troisième sous-réseau;

calculer une valeur de la fonction de perte conjointe selon le résultat de la reconnaissance de phonème, le phonème étiqueté et la fonction de perte conjointe; et

mettre à jour les paramètres du premier sous-réseau, du deuxième sous-réseau et du troisième sous-réseau en fonction de la valeur de la fonction de perte conjointe.

**8.** Procédé d'entraînement d'un réseau neuronal selon l'une quelconque des revendications 1 à 7, dans lequel le premier sous-réseau comprend une pluralité de couches de réseaux de longue mémoire à court terme ayant une connexion par judas, et le deuxième sous-réseau comprend une pluralité de couches de réseaux de longue mémoire à court terme ayant une connexion par judas.

**9.** Procédé de reconnaissance vocale basé sur un réseau neuronal, le procédé étant mis en oeuvre par un dispositif électronique, le réseau neuronal comprenant un premier sous-réseau, un deuxième sous-réseau et un troisième sous-réseau, le procédé comprenant:

obtenir un spectre de parole mixte à reconnaître (S810);

extraire un spectre de parole cible du spectre de parole mixte en utilisant le premier sous-réseau (S820), dans lequel le spectre de parole mixte est une caractéristique spectrale de données de parole mixtes, les données de parole mixtes comprennent des données de parole cible et des données de parole d'interférence, le spectre de parole cible est une caractéristique spectrale des données de parole cibles;

transformer de manière adaptative le spectre de parole cible en utilisant le deuxième sous-réseau, pour obtenir une représentation de transition intermédiaire (S830); et

effectuer une reconnaissance de phonème sur la représentation de transition intermédiaire en utilisant le troisième sous-réseau (S840);

dans lequel la transformation adaptative du spectre de parole cible en utilisant le deuxième sous-réseau (S830) comprend:

transformer de manière adaptative, en séquence, le spectre de parole cible correspondant à des fenêtres temps-fréquence, selon une séquence des fenêtres temps-fréquence correspondant au spectre de parole cible, dans lequel un processus de transformation de la transformation adaptative pour l'une des fenêtres temps-fréquence comprend:

générer une première pièce d'information d'état cachée pour un processus de transformation actuel selon le spectre de parole cible correspondant à la fenêtre temps-fréquence ciblée par le processus de transformation actuel, et une première pièce d'information d'état cachée pour un processus de transformation précédent; et

obtenir, sur la base des premières pièces d'information d'état cachée, la représentation de transition intermédiaire correspondant à la fenêtre temps-fréquence ciblée par le processus de transformation actuel, **caractérisé par le fait que** la génération d'une première pièce d'information d'état cachée pour un processus de transformation actuel comprend:

calculer une information d'état candidat, un poids d'entrée de l'information d'état candidat, un poids d'oubli de l'information d'état cible pour le processus de transformation précédent, et un poids de sortie d'information d'état cible pour le processus de transformation actuel selon le spectre de parole cible correspondant à une fenêtre temps-fréquence actuelle et la première pièce d'information d'état cachée pour le processus de transformation précédent (S610);

conserver l'information d'état cible pour le processus de transformation précédent selon le poids d'oubli pour obtenir une première information d'état intermédiaire (S620);

conserver l'information d'état candidat selon le poids d'entrée de l'information d'état candidat pour obtenir une deuxième information d'état intermédiaire (S630);

obtenir l'information d'état cible pour le processus de transformation actuel selon la première information d'état intermédiaire et la deuxième information d'état intermédiaire (S640); et

conserver l'information d'état cible pour le processus de transformation actuel selon le poids de sortie de l'information d'état cible pour le processus de transformation actuel afin d'obtenir la première pièce d'information d'état cachée pour le processus de transformation actuel (S650),

dans lequel le procédé comprend en outre: transformer de manière adaptative, en séquence inverse, le spectre de parole cible correspondant aux fenêtres temps-fréquence pour obtenir une deuxième pièce d'information d'état cachée, épisser la première pièce d'information d'état cachée avec la deuxième pièce d'information d'état cachée pour obtenir une pièce cible d'information d'état cachée, et utiliser la pièce cible d'information d'état cachée comme première pièce d'information d'état cachée.

10. Support de stockage lisible par ordinateur, stockant un programme informatique, le programme informatique, lorsqu'il est exécuté par un processeur, mettant en oeuvre le procédé selon l'une quelconque des revendications 1 à 9.

11. Dispositif électronique comprenant:

un processeur et
une mémoire qui est configurée pour stocker des instructions exécutables du processeur,
le processeur étant configuré pour mettre en oeuvre le procédé selon l'une quelconque des revendications 1 à 9 en exécutant les instructions exécutables.

FIG. 1

200

```
┌──────────┐ ⌐201      ┌──────────┐ ⌐202      ┌──────────┐ ⌐203
│   CPU    │           │   ROM    │           │   RAM    │
└──────────┘           └──────────┘           └──────────┘
```

⌐204

I/O interface ⌐205

| Input part | Output part | Storage part | Communication part | Driver |

⌐206  ⌐207  ⌐208  ⌐209  ⌐210

Removable medium ⌐211

FIG. 2

| Obtain a piece of sample data, the piece of sample data including a mixed speech spectrum and a labeled phoneme of the mixed speech spectrum | S310 |

| Extract a target speech spectrum from the mixed speech spectrum by using the first subnetwork | S320 |

| Adaptively transform the target speech spectrum by using the second subnetwork, to obtain an intermediate transition representation | S330 |

| Perform phoneme recognition on the intermediate transition representation by using the third subnetwork | S340 |

| Update parameters of the first subnetwork, the second subnetwork, and the third subnetwork according to a result of the phoneme recognition and the labeled phoneme | S350 |

## FIG. 3

| Embed the mixed speech spectrum into a multi-dimensional vector space, to obtain embedding vectors, corresponding to time-frequency windows, of the mixed speech spectrum | S410 |

| Weight the embedding vectors of the mixed speech spectrum by using an ideal ratio mask, to obtain an attractor corresponding to the target speech spectrum | S420 |

| Calculate similarities between each of the embedding vectors of the mixed speech spectrum and the attractor to obtain a target masking matrix corresponding to the target speech spectrum | S430 |

| Extract the target speech spectrum from the mixed speech spectrum based on the target masking matrix | S440 |

## FIG. 4

FIG. 5

| Calculate candidate state information, an input weight of the candidate state information, a forget weight, and an output weight of target state information according to the target speech spectrum corresponding to a current time-frequency window and the piece of hidden state information for the previous transformation process | S610 |

| Retain the target state information for the previous transformation process according to the forget weight, to obtain first intermediate state information | S620 |

| Retain the candidate state information according to the input weight of the candidate state information, to obtain second intermediate state information | S630 |

| Obtain the target state information for the current transformation process according to the first intermediate state information and the second intermediate state information | S640 |

| Retain the target state information for the current transformation process according to the output weight of the target state information for the current transformation process, to obtain the piece of hidden state information for the current transformation process | S650 |

FIG. 6

| Apply a multi-dimensional filter to the intermediate transition representation by using at least one convolutional layer, to generate an output of the convolutional layer | S710 |

| Use the output of the convolutional layer in at least one recursive layer, to generate an output of the recursive layer | S720 |

| Provide the output of the recursive layer to a fully connected layer, and apply a nonlinear function to an output of the fully connected layer, to obtain a posterior probability of a phoneme included in the intermediate transition representation | S730 |

## FIG. 7

| Obtain a mixed speech spectrum to be recognized | S810 |

| Extract a target speech spectrum from the mixed speech spectrum by using the first subnetwork | S820 |

| Adaptively transform the target speech spectrum by using the second subnetwork, to obtain an intermediate transition representation | S830 |

| Perform phoneme recognition on the intermediate transition representation by using the third subnetwork | S840 |

## FIG. 8

EP 3 926 623 B1

FIG. 9

Speech recognition task interfered with by background music

FIG. 10A

Speech recognition task interfered with by another speaker

FIG. 10B

1100

Apparatus for training a neural network

1110
Data obtaining module

1120
Target speech extraction module

1130
Adaptive transformation module

1140
Speech recognition module

1150
Parameter update module

FIG. 11

1200

Apparatus for training a neural network

1210
Data obtaining module

1220
Target speech extraction module

1230
Adaptive transformation module

1240
Speech recognition module

FIG. 12

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910838469